# EUROPEAN PATENT APPLICATION

(11) **EP 4 369 095 A1**
(43) Date of publication of application: **15.05.2024**
(21) Application number: 23207856.8
(22) Date of filing: 06.11.2023
(51) Int. Cl.: G03B 21/20

(54) **PROJECTOR**

(30) Priority: 07.11.2022 JP 2022177916
(71) Applicant: Seiko Epson Corporation, Tokyo 160-8801 (JP)
(72) Inventor: MIZUTANI, Tomoya, Suwa-shi, 392-8502 (JP); KASHIWAGI, Akihiro, Suwa-shi, 392-8502 (JP)
(74) Representative: Lewis Silkin LLP

(57) **Abstract**

A projector according to an aspect of the present disclosure includes a light source that emits first light, a wavelength converter that is irradiated with the first light and emits second light emitted at a wavelength different from the wavelength at which the first light is emitted, an optical system that enlarges the luminous flux of the first light and the luminous flux of the second light from the wavelength converter, a parallelizing lens, a light modulator, a light-exiting-side polarizing element, a projection lens, and a light-incident-side polarizing element that transmits light polarized in a predetermined polarization direction and reflects light polarized in a direction other than the predetermined polarization direction. Nonlinearly polarized light enters the light-incident-side polarizing element, and the light-incident-side polarizing element is disposed on the optical path of the second light between the light source and the parallelizing lens.

## Description

The present application is based on, and claims priority from JP Application Serial Number 2022-177916, filed November 7, 2022, the disclosure of which is hereby incorporated by reference herein in its entirety.

### BACKGROUND

### 1. Technical Field

The present disclosure relates to a projector.

### 2. Related Art

In recent years, there has been a known projector including a single liquid crystal panel as a light modulator that modulates color light to generate image light having the color of the color light, that is, a single-panel projector. For example, in the single-panel projector disclosed in Chinese Utility Model Registration No. 201,622,432, out of the two Fresnel lenses, a reflective polarizing plate is provided between the light-incident-side Fresnel lens, which is disposed in the vicinity of the light source, and the liquid crystal panel. When the light emitted from the light source is incident on the reflective polarizing plate via the condenser lens and the light-incident-side Fresnel lens, light polarized in a predetermined polarization direction out of the incident light passes through the polarizing plate and enters the liquid crystal panel, which modulates the polarized light into the image light.

Chinese Utility Model Registration No. 201,622,432 is an example of the related art.

In the projector disclosed in Chinese Utility Model Registration No. 201,622,432, when the light emitted from the light source is incident on the reflective polarizing plate, at least part of the light polarized in the directions other than the predetermined polarization direction out of the incident light returns to the light-incident-side Fresnel lens, resulting in an increase in the amount of light absorbed by the light-incident-side Fresnel lens and in turn an increase in heat generated therein. That is, it is believed that a lens disposed in a region closer to the light source than the reflective polarizing plate is deformed, and that the amount of light incident on the lens and the amount of light that exits out of the lens decrease. For example, when the lens is made of resin, it is conceivable that the lens may be yellowed. Single-panel projectors have therefore been required to prevent the deformation and deterioration of the lens disposed on the optical path at a position closer to the light source than the reflective polarizing plate and a decrease in the optical function of the lens.

### SUMMARY

To solve the problems described above, a projector according to an aspect of the present disclosure includes a light source that emits first light, a wavelength converter that is irradiated with the first light and emits second light emitted at a wavelength different from the wavelength at which the first light is emitted, an optical system that enlarges a luminous flux of the first light passing through the wavelength converter and a luminous flux of the second light emitted from the wavelength converter, a parallelizing lens that parallelizes the light enlarged by the optical system, a light modulator on which the light parallelized by the parallelizing lens is incident and which modulates the incident light to generate image light, a light-exiting-side polarizing element on which the image light that exits out of the light modulator is incident, a projection lens that projects the image light that exits out of the light-exiting-side polarizing element, and a light-incident-side polarizing element that transmits light polarized in a predetermined polarization direction and reflects light polarized in a direction other than the predetermined polarization direction. Nonlinearly polarized light enters the light-incident-side polarizing element, and the light-incident-side polarizing element is disposed on an optical path of the second light between the light source and the parallelizing lens.

### BRIEF DESCRIPTION OF THE DRAWINGS

FIG. 1 is a schematic view illustrating the configuration of a projector according to a first embodiment.
FIG. 2 is a schematic view illustrating the configurations of a light emitter and a light-incident-side polarizing element of the projector in FIG. 1 and the behavior of the light therein.
FIG. 3 is a schematic view illustrating the configurations of a light emitter and a light-incident-side polarizing element of the projector according to a second embodiment.
FIG. 4 is a schematic view illustrating the configurations of the light emitter and the light-incident-side polarizing element of the projector according to a third embodiment.
FIG. 5 is a schematic view illustrating the configurations of the light emitter and the light-incident-side polarizing element of the projector according to a fourth embodiment.
FIG. 6 is a schematic view illustrating the configurations of the light emitter, the light-incident-side polarizing element, and a white light enlarging optical system of the projector according to a fifth embodiment.
FIG. 7 is a schematic view illustrating the configurations of the light emitter, the optical system, and the light-incident-side polarizing element of the projector according to a sixth embodiment.
FIG. 8 is a schematic view illustrating the configurations of the light emitter, the optical system, and the light-incident-side polarizing element of the projector according to a seventh embodiment.
FIG. 9 is a schematic view illustrating the configurations of the light emitter, the optical system, a phase retarder, and the light-incident-side polarizing element of the projector according to an eighth embodiment.
FIG. 10 shows graphs illustrating the result of a simulation of calculation of the efficiency of effective use of blue light and yellow light in the projector according to the eighth embodiment.
FIG. 11 is a schematic view illustrating the configurations of the light emitter, a rod member, and the light-incident-side polarizing element of the projector according to a ninth embodiment.

### DESCRIPTION OF EMBODIMENTS

### First embodiment

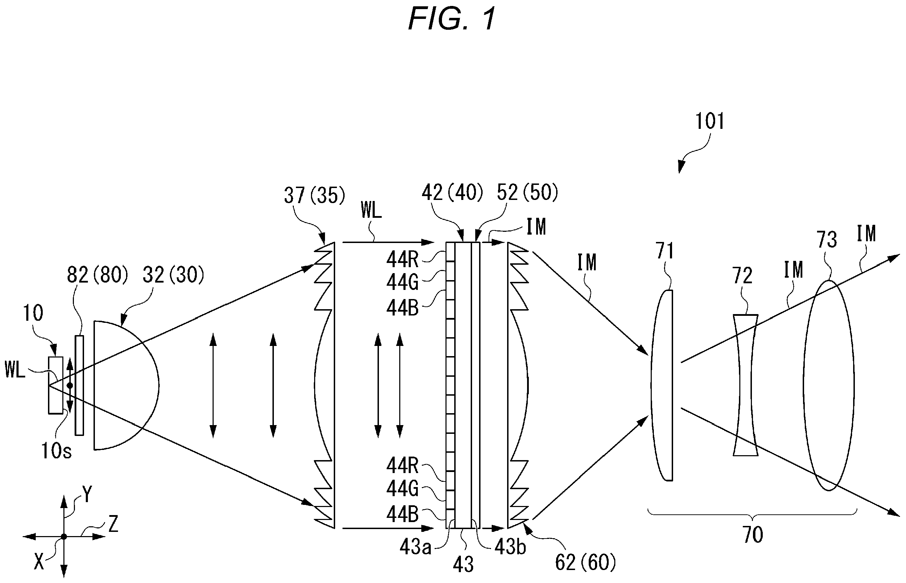

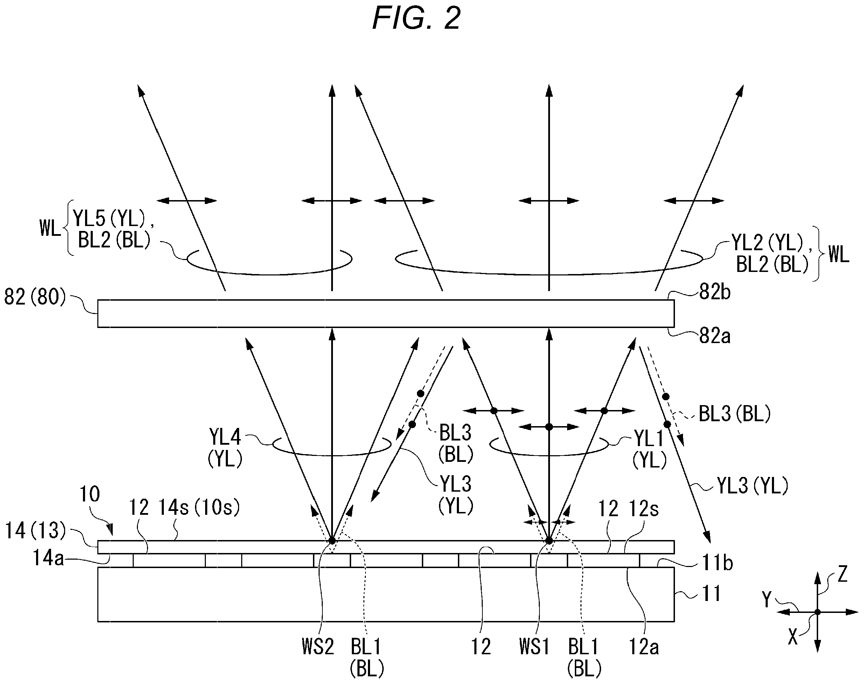

A first embodiment of the present disclosure will be described below with reference to FIGS. 1 and 2. In the following drawings, components are drawn at different dimensional scales in some cases for clarification of each of the components. FIG. 1 is a schematic view showing the configuration of a projector 101 according to the first embodiment. The projector 101 is an image display apparatus using a single liquid crystal panel as an optical modulator, and is what is called a single-panel projector.

The projector 101 includes a light emitter 10, a light-incident-side polarizing element 80, a pickup lens 30, a parallelizing lens 35, a light modulator 40, a light-exiting-side polarizing element 50, and a projection system 70, as shown in FIG. 1.

The light emitter 10 emits white light WL. In the following description, one direction parallel to a light emitting surface 10s of the light emitter 10 is called a direction X, and the direction parallel to the light emitting surface 10s and perpendicular to the direction X is called a direction Y. The direction perpendicular to the light emitting surface 10s and the directions X and Y is called a direction Z. The configuration of the light emitter 10 will be described later in detail. The light emitting surface 10s of the light emitter 10 in the first embodiment corresponds to a light emitting surface 14s of a phosphor layer 14, which forms a wavelength converter 13, which will be described later. The white light WL emitted from the light emitter 10 is divergent light that diverges from the light emitting surface with respect to the direction Z, and is nonlinearly polarized light, for example, randomly polarized light. In the present specification, nonlinearly polarized light is not linearly polarized light having an electric field vector oscillating only in one direction, and may contain, for example, a plurality of linearly polarized light components having electric field vectors oscillating in directions different from one another, for example, randomly polarized light or elliptical polarized light. Note that the direction in which the electric field vector of light oscillates is referred to as the polarization direction in some cases.

The light-incident-side polarizing element 80 is disposed on the optical path of the white light WL emitted from the light emitter 10. The light-incident-side polarizing element 80 is a reflective polarizing element, transmits light polarized in a predetermined polarization direction out of the white light WL emitted from the light emitter 10, and reflects light polarized in the directions other than the predetermined polarization direction. The light-incident-side polarizing element 80 is, for example, a reflective polarizing plate 82 sensitive to the visible wavelength band. The light polarized in the predetermined polarization direction is, for example, P-polarized light or S-polarized light.

The pickup lens 30 is disposed on the optical path of the white light WL having passed through the light-incident-side polarizing element 80 and exited out of the light-incident-side polarizing element 80. The pickup lens 30 enlarges in the plane XY spreading in the directions X and Y the luminous flux of blue light BL and the luminous flux of yellow light YL contained in the white light WL having exited out of the light-incident-side polarizing element 80. The white light WL having exited out of the light-incident-side polarizing element 80 corresponds to the "luminous flux of the first light passing through the wavelength converter" and the "luminous flux of the second light emitted from the wavelength converter" described in the claims, which will be described later. The pickup lens 30 is, for example, a plano-convex lens 32 having a convex curved surface that is convex toward the side toward which the enlarged white light WL exits. The pickup lens 30 may be formed of a plurality of lenses. The pickup lens 30 may be replaced with an optical element capable of enlarging the white light WL in the plane XY. The pickup lens 30 or an optical element capable of enlarging the white light WL corresponds to the "optical system that enlarges the luminous flux of the first light passing through the wavelength converter and the luminous flux of the second light emitted from the wavelength converter" described in the claims, which will be described later.

The parallelizing lens 35 is disposed on the optical path of the white light WL having exited out of the pickup lens 30. The parallelizing lens 35 parallelizes along the direction Z the white light WL enlarged by the pickup lens 30. The parallelizing lens 35 is, for example, a Fresnel lens 37 having a lens surface, that is, a phase modulation surface that is convex toward the side on which the white light WL is incident. Using the Fresnel lens 37 suppresses the thickness of the parallelizing lens 35 even when the parallelizing lens 35 has a large diameter.

The light modulator 40 is disposed on the optical path of the white light WL having exited out of the parallelizing lens 35. That is, the white light WL having exited out of the parallelizing lens 35 enters the light modulator 40. The white light WL having exited out of the parallelizing lens 35 corresponds to the "light parallelized by the parallelizing lens" described in the claims, which will be described later. The light modulator 40 modulates the incident white light WL to generate full-color image light IM. The light modulator 40 is, for example, a transmissive liquid crystal panel 42.

The liquid crystal panel 42 includes a liquid crystal device 43 and a plurality of color filters 44R, 44G, and 44B. Although not shown in detail, the liquid crystal device 43 has a plurality of pixels. The pixels of the liquid crystal device 43 each have sub-pixels corresponding to red, green, and blue. The sub-pixels each include a switching device. The switching device may, for example, be a polysilicon thin film transistor (TFT). Although not shown in detail, an absorptive polarizing element may be provided between the parallelizing lens 35 and the liquid crystal device 43.

The absorptive polarizing element may, for example, be a polarizing film formed of a polyvinyl-alcohol-based (PVA-based) film stretched in one direction and caused to adsorb dispersed iodine, a polarizing film formed of a PVA film chemically treated into a dichroic film and unidirectionally stretched, a PVA, metal-based polarizing film formed of a PVA-based film caused to adsorb gold, silver, copper, mercury, iron, or any other metal, a near-ultraviolet polarizing film formed of a PVA-based film treated with a boric acid solution containing potassium iodide and sodium thiosulfate, and a polarizing element formed of a PVA-based film made of modified PVA containing in-molecule cationic groups with at least one of the surface and interior of the film containing a dichroic dye. It is preferable that the transmission axis of the absorptive polarizing element and the transmission axis of the light-incident-side polarizing element 80, which will be described later, coincide with each other in terms of direction. Therefore, when the polarization state of the luminous flux having passed through the light-incident-side polarizing element 80 deteriorates, noise due to the deterioration can be absorbed by the absorptive polarizing element.

The plurality of color filters 44R, 44G, and 44B are provided at a plate surface 43a, which is a surface of the liquid crystal device 43 and on which the white light WL is incident. The plurality of color filters 44R are arranged in correspondence with the red sub-pixels of the plurality of pixels of the liquid crystal device 43. The plurality of color filters 44G are arranged in correspondence with the green sub-pixels of the plurality of pixels of the liquid crystal device 43. The plurality of color filters 44B are arranged in correspondence with the blue sub-pixels of the plurality of pixels of the liquid crystal device 43.

The color filters 44R transmit red light out of the incident white light WL. The sub-pixels of the liquid crystal device 43, at which the color filters 44R are disposed, modulate the polarization direction of the red light having passed through the color filters 44R with the aid of the operation of the switching devices to generate red image light. The color filters 44G transmit green light out of the incident white light WL. The sub-pixels of the liquid crystal device 43, at which the color filters 44G are disposed, modulate the polarization direction of the green light having passed through the color filters 44G with the aid of the operation of the switching devices to generate green image light. The color filters 44B transmit blue light out of the incident white light WL. The sub-pixels of the liquid crystal device 43, at which the color filters 44B are disposed, modulate the polarization direction of the blue light having passed through the color filters 44B with the aid of the operation of the switching devices to generate blue image light. The three primary color image light fluxes output from the plurality of pixels of the liquid crystal device 43 are combined with one another into the full-color image light IM.

In FIG. 1, the color filters 44R, 44G, and 44B are repeatedly arranged in this order at the plate surface 43a of the liquid crystal device 43. Note, however, that the sub-pixels that modulate the color light fluxes different from one another only need to be adjacent to each other in each of the pixels in correspondence with the color filters 44R, 44G, and 44B. The arrangement and order of the color filters 44R, 44G, and 44B are therefore not limited to those shown in FIG. 1.

The light-exiting-side polarizing element 50 is disposed on the optical path of the image light IM having exited out of the light modulator 40. The light-exiting-side polarizing element 50 is provided, for example, at a plate surface 43b, which is a surface of the liquid crystal device 43 of the liquid crystal panel 42 of the light modulator 40 and opposite from the plate surface 43a. The plate surface 43b is a plate surface of the liquid crystal device 43 at the side via which the image light IM exits. The light-exiting-side polarizing element 50 transmits light polarized in an appropriate polarization direction based on the predetermined polarization direction out of the image light IM having exited out of the light modulator 40, and absorbs light polarized in the directions other than the appropriate polarization direction. That is, the image light IM having exited out of the light modulator 40 enters the light-exiting-side polarizing element 50 and is converted into the light polarized in the appropriate polarization direction. The light-exiting-side polarizing element 50 is, for example, an absorptive polarizing plate 52 sensitive to the visible wavelength band.

A light collection lens 60 is provided on the optical path of the image light IM having exited out of the light-exiting-side polarizing element 50. The light collection lens 60 collects along the direction Z the image light IM having exited out of the light-exiting-side polarizing element 50. The light collection lens 60 is, for example, a Fresnel lens 62 having a lens surface, that is, a phase modulation surface that is convex toward the side toward which the image light IM exits. Using the Fresnel lens 62 suppresses the thickness of the light collection lens 60 even when the light collection lens 60 has a large diameter. The image light IM having exited out of the light collection lens 60 corresponds to the "image light that exits out of the light-exiting-side polarizing element" described in the claims, which will be described later.

The projection system 70 is disposed on the optical path of the image light IM having exited out of the light collection lens 60. The projection system 70 projects the image light IM having exited out of the light-exiting-side polarizing element 50 to display a full-color image based on the image light IM at a screen that is not shown but is provided in front of the projection system 70 in the traveling direction of the image light IM. The projection system 70 is formed, for example, of a plano-convex lens 71, a biconcave lens 72, and a biconvex lens 73. The projection system 70 may be formed of two or less optical lenses, or four or more optical lenses. The optical lenses are not limited to a plano-convex lens, a biconcave lens, and a biconvex lens, and may be a meniscus lens, a freeform surface lens, or an aspherical lens. The projection system 70 corresponds to the "projection lens" described in the claims, which will be described later.

FIG. 2 is a schematic view of key parts of the projector 101 in FIG. 1, and describes the configuration of the light emitter 10 and the behavior of the light in the light emitter 10 and the light-incident-side polarizing element 80. The light emitter 10 is formed of a substrate 11, a light source 12, and the wavelength converter 13, as shown in FIG. 2. The substrate 11 has a plate surface 11b parallel to the plane XY.

The light source 12 is provided at the plate surface 11b of the substrate 11. The light emitter 10 includes, for example, a plurality of light sources 12, but the number of light sources 12 provided in the light emitter 10 is not limited to a specific number. The plurality of light sources 12 are arranged at the plate surface 11b of the substrate 11 at intervals therebetween in the directions X and the Y. The light sources 12 emit the blue light BL. The wavelengths at which the blue light BL is emitted range, for example, from 440 nm to 480 nm, but are not limited to specific wavelengths and may be any wavelengths that belong to a blue wavelength band out of the visible wavelength band.

The light sources 12 are each, for example, a light emitting diode (LED) that emits the blue light BL. The blue light BL is emitted radially via a light emitting surface 12s, which is a surface of each of the light sources 12 and opposite from a bottom surface 12a in contact with the plate surface 11b of the substrate 11.

The wavelength converter 13 is disposed to cover the light emitting surfaces 12s of the plurality of light sources 12. The wavelength converter 13 converts the blue light BL emitted from the light sources 12 in terms of wavelength into the yellow light YL, and emits the yellow light YL. The wavelength converter 13 is, for example, the phosphor layer 14 formed in parallel to the plane XY. The phosphor layer 14 has a light incident surface 14a in contact with the light emitting surfaces 12s of the plurality of light sources 12 and the light emitting surface 14s opposite from the light incident surface 14a. The light incident surface 14a of the phosphor layer 14 is in contact with the light emitting surfaces 12s of the plurality of light sources 12. The blue light BL emitted from the light sources 12 enters the phosphor layer 14 via the light incident surface 14a and is scattered therein. At least part of the blue light BL having entered the phosphor layer 14 acts as excitation light to generate yellow light YL1 as fluorescence. That is, the phosphor layer 14 emits the yellow light YL via the light emitting surface 14s. On the other hand, at least part of the remaining blue light BL is internally scattered in the phosphor layer 14, passes through the phosphor layer 14, and exits substantially radially via the light emitting surface 14s. As a result, the blue light BL and the yellow light YL radially exit from a wave source WS1 on the light emitting surface 14s of the phosphor layer 14.

The wavelengths at which the yellow light YL is emitted range, for example, from 500 nm to 670 nm, but are not limited to specific wavelengths and may be any wavelengths that belong to a yellow wavelength band out of the visible wavelength band. The blue light BL emitted from the light sources 12 corresponds to the "first light" described in the claims, which will be described later. The yellow light YL emitted by the wavelength converter 13 corresponds to the "second light" described in claims, which will be described later, and is emitted at wavelengths different from those at which the first light is emitted. The yellow light YL contains green light and red light.

The phosphor layer 14 is formed, for example, of an yttrium-aluminum-garnet-based (YAG-based) ceramic phosphor. The phosphor of the phosphor layer 14 is, for example, YAG (YAG:Ce³⁺) containing cerium (Ce) as an activator. The phosphor of the phosphor layer 14 may be made of one type of material, or a mixture of particles made of two or more fluorescent materials.

The blue light BL emitted from the light sources 12 and passing through the wavelength converter 13 and the yellow light YL1 emitted from the wavelength converter 13 are nonlinearly polarized light, for example, randomly polarized light. Note that FIG. 2 shows polarization components parallel to the directions X and Y by way of example out of the polarization directions of the blue light BL and the yellow light YL. Out of the nonlinearly polarized blue light BL having passed through the wavelength converter 13 and the nonlinearly polarized yellow light YL1 emitted from the wavelength converter 13, blue light BL2 and yellow light YL2 polarized in the predetermined direction set in accordance with the specifications and optical characteristics of the liquid crystal panel 42 of the light modulator 40 pass through the polarizing plate 82, which forms the light-incident-side polarizing element 80. The predetermined polarization direction is, for example, parallel to the direction Y, which is the vertical direction of the plane of view of FIG. 1 and the horizontal direction of the plane of view of FIG. 2.

On the other hand, out of the nonlinearly polarized blue light BL1 having passed through the wavelength converter 13 and the nonlinearly polarized yellow light YL1 emitted from the wavelength converter 13, blue light BL3 and yellow light YL3 polarized in the directions other than the predetermined polarization direction are reflected off the polarizing plate 82, which forms the light-incident-side polarizing element 80. The light emitting surface 14s of the phosphor layer 14 is irradiated with the blue light BL3, which enters the phosphor layer 14 via the light emitting surface 14s, acts as the excitation light to generate yellow light YL4 as the fluorescence. The yellow light YL4 radially exits from a wave source WS2 on the light emitting surface 14s of the phosphor layer 14. The yellow light YL4 contains randomly polarized light and elliptically polarized light. Out of the polarized light contained in the yellow light YL4, yellow light YL5 polarized in the predetermined polarization direction passes through the polarizing plate 82, which forms the light-incident-side polarizing element 80, as the yellow light YL1 described above does. Out of the polarized light contained in the yellow light YL4, the yellow light YL, which is not shown but polarized in the directions other than the predetermined polarization direction, is reflected off the polarizing plate 82, which forms the light-incident-side polarizing element 80.

As described above, the blue light BL1 and the yellow light YL1 and YL4 repeatedly exit out of the wavelength converter 13. The blue light BL1 and the yellow light YL2 and YL5 repeatedly pass through the light-incident-side polarizing element 80, and the blue light BL3 and the yellow light YL3 are repeatedly reflected off the light-incident-side polarizing element 80. A plurality of wave sources WS1 and WS2 are generated at the light emitting surface 14s of the phosphor layer 14, which forms the wavelength converter 13. The wavelength converter 13 around each of the plurality of wave sources WS1 in the vicinity of the wave source WS1 emits the blue light BL in the form of divergent light and emits the yellow light YL, which is the fluorescence. The wavelength converter 13 around each of the plurality of wave sources WS2 in the vicinity of the wave source WS2 is excited again by the blue light BL, and emits the randomly polarized yellow light YL, which is scattered at the inner surface of the wavelength converter 13.

The blue light BL1 and the yellow light YL1 emitted via the light emitting surface 14s of the phosphor layer 14, which forms the wavelength converter 13, are combined with the blue light BL1 and the yellow light YL4, and the combined light behaves as the nonlinearly polarized white light WL. Similarly, the blue light BL2 and the yellow lights YL2 and YL5, which exit via a light exiting surface 82b, which is a surface of the polarizing plate 82, which forms the light-incident-side polarizing element 80, and opposite from a light incident surface 82a, are combined with each other, and the combined light behaves as the nonlinearly polarized white light WL.

Due to the optical behavior described above, the greater the number by which the blue light BL and the yellow light YL are reflected off the light-incident-side polarizing element 80, and the number by which the phosphor layer 14, which forms the wavelength converter 13, in the light emitter 10 is excited again to emit the yellow light YL, the greater the amount of yellow light YL that exits out of the light-incident-side polarizing element 80 than the amount of blue light BL that exits out of the same light-incident-side polarizing element 80. Therefore, to achieve a suitable color balance of the full-color image light IM output from the projector 101 according to the first embodiment, it is preferable that the amount of blue light BL contained in the white light WL first emitted from the light emitter 10 is greater than the amount of yellow light YL. A method for increasing the amount of blue light BL first emitted from the light emitter 10 is, for example, a method for setting driving current to be supplied to the light sources 12 at a large value, or a method for suppressing the efficiency at which the blue light BL is converted into the yellow light YL in the wavelength converter 13. The efficiency at which the blue light BL is converted into the yellow light YL in the wavelength converter 13 can be adjusted as appropriate, for example, by changing the concentration of the cerium (Ce) in the phosphor of the phosphor layer 14, by changing the porosity of the phosphor layer, or by changing the thickness of the phosphor layer or the ratio or mixing ratio of the constituent elements of the phosphor to change the composition of the phosphor layer 14.

That is, the ratio in terms of the amount of light between the blue light BL and the yellow light YL first emitted from the light emitter 10 is set and adjusted as appropriate in accordance with the color balance required for the full-color image light IM output from the projector 101.

The projector 101 according to the first embodiment described above includes the light sources 12, the wavelength converter 13, the pickup lens 30, the parallelizing lens 35, the light modulator 40, the light-exiting-side polarizing element 50, the projection system 70, and the light-incident-side polarizing element 80. The light sources 12 emit the blue light BL. The wavelength converter 13 is irradiated with the blue light BL. The wavelength converter 13 emits the yellow light YL, which is emitted at wavelengths different from the wavelengths at which the blue light BL is emitted. The pickup lens 30 enlarges the luminous flux of the blue light BL having passed through the wavelength converter 13 and the luminous flux of the yellow light YL emitted from the wavelength converter 13. The parallelizing lens 35 parallelizes the white light WL enlarged by the pickup lens 30. The white light WL parallelized by the parallelizing lens 35 enters the light modulator 40. The light modulator 40 modulates the incident white light WL to generate the image light IM. The image light IM having exited out of the light modulator 40 enters the light-exiting-side polarizing element 50. The projection system 70 projects the image light IM having exited out of the light-exiting-side polarizing element 50. At least the nonlinearly polarized white light WL having exited out of the wavelength converter 13 enters the light-incident-side polarizing element 80. The light-incident-side polarizing element 80 is a reflective polarizing element, transmits the light polarized in the predetermined polarization direction out of the incident white light WL, and reflects the light polarized in the directions other than the predetermined polarization direction.

In the projector 101 according to the first embodiment, the light-incident-side polarizing element 80 is disposed between the light sources 12 in the light emitter 10 and the parallelizing lens 35 at least on the optical path of the yellow light YL. The optical paths of the yellow light YL and the white light WL correspond to the "optical path of the second light" described in the claims, which will be described later. The projector 101 according to the first embodiment, in which the light-incident-side polarizing element 80 is disposed on the optical path of the white light WL at a position closer to the light sources 12 than the parallelizing lens 35, allows reduction in the amount of white light WL reflected off the light-incident-side polarizing element 80 toward the parallelizing lens 35 and radiated to the parallelizing lens 35, as compared with a case where the light-incident-side polarizing element 80 is disposed on the optical path of the white light WL at a position farther from the wavelength converter 13 than the parallelizing lens 35. The thus configured single-panel projector 101 prevents deformation and deterioration of the parallelizing lens 35. The thus configured single-panel projector 101 further suppresses the amount of white light WL polarized in the directions other than the predetermined polarization direction and entering the parallelizing lens 35, so that deterioration of the optical function of the parallelizing lens 35 is avoided. The deterioration of the optical function of the parallelizing lens 35 is avoided, for example, by reduction in the amount of white light WL that exits out of the parallelizing lens 35. On the other hand, in projectors of related art, the light-incident-side polarizing element is disposed, for example, on the optical path between the parallelizing lens and the light modulator. The parallelizing lens is therefore irradiated with most of the light reflected off the light-incident-side polarizing element, so that deformation and deterioration of the parallelizing lens, and a decrease in the optical function thereof tend to occur. In particular, when the parallelizing lens 35 is made of resin or plastic transparent to visible light, the projector 101 according to the first embodiment can suppress the amount of white light WL polarized in the directions other than the predetermined polarization direction and entering the parallelizing lens 35, and prevent yellowing and other unwanted phenomena of the parallelizing lens 35.

In the projector 101 according to the first embodiment, the light-incident-side polarizing element 80 is disposed between the wavelength converter 13 in the light emitter 10 and the pickup lens 30. The projector 101 according to the first embodiment therefore allows reduction in the amount of white light WL reflected off the light-incident-side polarizing element 80 toward the parallelizing lens 35 and radiated to the parallelizing lens 35 as described above, as compared with the case where the light-incident-side polarizing element 80 is disposed on the optical path of the white light WL in a position farther from the wavelength converter 13 than the parallelizing lens 35. In addition, the projector 101 according to the first embodiment, in which the light-incident-side polarizing element 80 is disposed immediately downstream from the wavelength converter 13, allows an increase in the amount of blue light BL incident on the wavelength converter 13 out of the white light WL reflected off the light-incident-side polarizing element 80. The thus configured projector 101 allows a further increase in the utilization of the blue light BL, which is the excitation light used to generate the yellow light YL as the fluorescence, and improvement in the light utilization efficiency in the projector 101.

In the projector 101 according to the first embodiment, the wavelength converter 13 has the phosphor layer 14. The light emitting surface 14s, which is a surface of the phosphor layer 14 and opposite from the light incident surface 14a facing the light sources 12, and the light incident surface 82a of the polarizing plate 82, which forms the light-incident-side polarizing element 80, are parallel to each other. The projector 101 according to the first embodiment can therefore reduce loss of the blue light BL that is reflected off the polarizing plate 82, which forms the light-incident-side polarizing element 80, toward a region in the plane XY that does not fall within the phosphor layer 14, which forms the wavelength converter 13, and is therefore not used as the excitation light out of the white light WL reflected off the light-incident-side polarizing element 80, so that the amount of blue light BL that enters the phosphor layer 14 via the light emitting surface 14s of the phosphor layer 14 can be ensured. The thus configured projector 101 allows a further increase in the utilization of the blue light BL as the excitation light to improve the light utilization efficiency therein.

In the projector 101 according to the first embodiment, a polarizing element that is not shown but differs from the light-incident-side polarizing element 80 may be provided at the light-incident-side plate surface of each of the plurality of color filters 44R, 44G, and 44B in the light modulator 40.

### Second embodiment

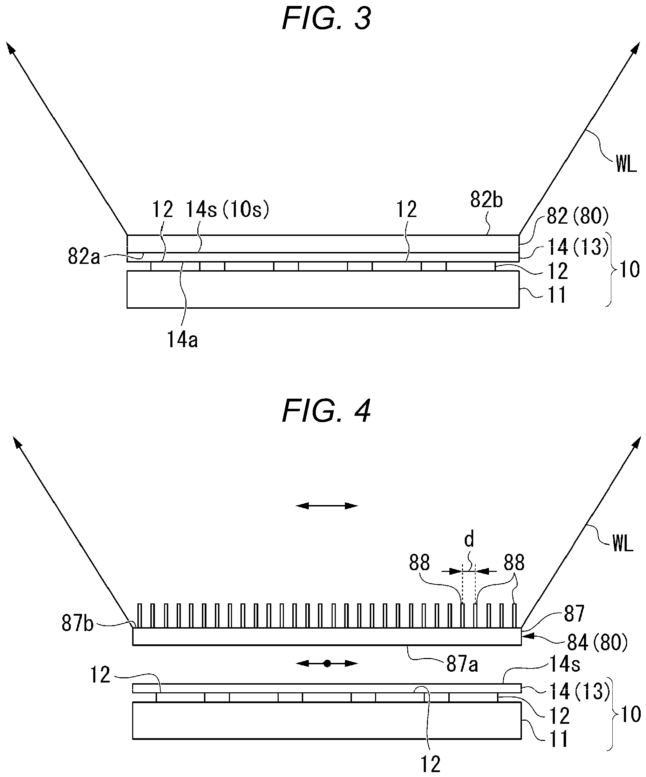

A second embodiment of the present disclosure will next be described with reference to FIG. 3.

In the second and subsequent embodiments, configurations common to those in the preceding embodiment have the same reference characters as those of the configurations in the preceding embodiment and will not be described. The second and subsequent embodiments will be described in terms of configurations and contents different from those of the preceding embodiment.

Although not shown, the projector according to the second embodiment includes the light emitter 10, the light-incident-side polarizing element 80, the pickup lens 30, the parallelizing lens 35, the light modulator 40, the light-exiting-side polarizing element 50, and the projection system 70, as the projector 101 according to the first embodiment does.

FIG. 3 is a schematic view illustrating the configurations of the light emitter 10 and the light-incident-side polarizing element 80 in the second embodiment. In the projector according to the second embodiment, the light-incident-side polarizing element 80 is provided at the light emitting surface 14s of the phosphor layer 14, which forms the wavelength converter 13, in the light emitter 10, as shown in FIG. 3. That is, the incident surface 82a of the polarizing plate 82, which forms the light-incident-side polarizing element 80, is in contact with the light emitting surface 14s of the phosphor layer 14, which forms the wavelength converter 13.

The state in which the light-incident-side polarizing element 80 is in contact with the wavelength converter 13 means that there is substantially no space between the light-incident-side polarizing element 80 and the wavelength converter 13 in the direction Z, and includes a state in which an adhesive or the like that does not affect the behavior of the white light WL is interposed between the light-incident-side polarizing element 80 and the wavelength converter 13. The adhesive is not limited to a specific one, but it is preferable that the adhesive has high transmittance for the white light WL, and high light resistance and high heat resistance against the white light WL. Examples of the transparent adhesive may include silicon adhesives, ultraviolet curable adhesives, and heat curable adhesives. The light-incident-side polarizing element 80 and the wavelength converter 13 may not be bonded to each other but may be chemically or physically integrated with each other with the two components superimposed on each other in the direction Z. In the method for chemically superimposing the light-incident-side polarizing element 80 and the wavelength converter 13 on each other, for example, the polarizing plate 82 and the phosphor layer 14 may be cooled with the two components superimposed on each other in the direction Z. In the method for physically superimposing the light-incident-side polarizing element 80 and the wavelength converter 13 on each other, for example, at least part of a circumferential portion of the polarizing plate 82 may be fixed to at least part of a circumferential portion of the phosphor layer 14 via a fixing member that is not shown with the two components superimposed on each other in the direction Z.

The projector according to the second embodiment provides the same effects as those provided by the projector 101 according to the first embodiment. In addition, the projector according to the second embodiment, in which the light-incident-side polarizing element 80 is in contact with the wavelength converter 13 in the light emitter 10, allows a further increase in the amount of white light WL reflected off the light-incident-side polarizing element 80 and entering the wavelength converter 13, as compared with the case where the light-incident-side polarizing element 80 is disposed with respect to the wavelength converter 13 with a gap therebetween, as in the first embodiment.

### Third embodiment

A third embodiment of the present disclosure will next be described with reference to FIG. 4. Although not shown, the projector according to the third embodiment includes the light emitter 10, the light-incident-side polarizing element 80, the pickup lens 30, the parallelizing lens 35, the light modulator 40, the light-exiting-side polarizing element 50, and the projection system 70, as the projector 101 according to the first embodiment does.

FIG. 4 is a schematic view for describing the configurations of the light emitter 10 and the light-incident-side polarizing element 80 and the behavior of the light in the third embodiment. In the projector according to the third embodiment, a wire grid polarizer 84 is used as the light-incident-side polarizing element 80, as shown in FIG. 4. The wire grid polarizer 84 includes, for example, a base 87 and a plurality of wire members 88. The base 87 has a light-incident-side plate surface 87a and a light-exiting-side plate surface 87b, which are parallel to the light emitting surface 14s of the phosphor layer 14, which forms the wavelength converter 13. The base 87 is made of a material having high transmittance for the white light WL and high heat dissipation capability. The base 87 is made, for example, of optical glass, quartz (SiO₂), sapphire that excels in heat dissipation capability, or an organic material. The plurality of wire members 88 are provided at the plate surface 87b of the base 87 at intervals therebetween, and are made of metal.

The wire members 88 extend in the direction X when the predetermined polarization direction is parallel to the direction Y, as in the first embodiment. The plurality of wire members 88 are arranged in the direction Y with a gap d therebetween. The gap d is the distance between the centers of the wire members 88 adjacent to each other in the direction Y. Based on the gap d, the cycle of the plurality of wire members 88 is preferably smaller than half of the peak wavelength of the blue light BL. The peak wavelength of the blue light BL corresponds to the "predetermined wavelength of the first light" described in the claims, which will be described later.

The projector according to the third embodiment provides the same effects as those provided by the projector 101 according to the first embodiment. In addition, in the projector according to the third embodiment, since the light-incident-side polarizing element 80 is formed of the wire grid polarizer 84, the heat from the phosphor layer 14, which forms the wavelength converter 13, in the light emitter 10 is received by the base 87 directly or via the plurality of wire members 88 made of metal, and the heat is dissipated via the base 87. Dissipating the heat of the wavelength converter 13 via the light-incident-side polarizing element 80 as described above allows improvement in the heat dissipation capability of the projector according to the third embodiment.

### Fourth embodiment

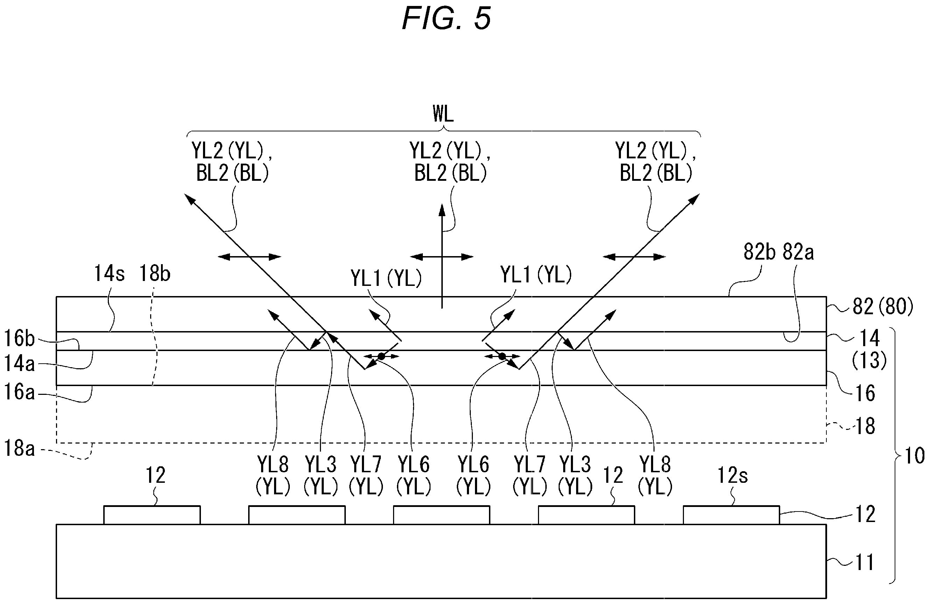

A fourth embodiment of the present disclosure will next be described with reference to FIG. 5. Although not shown, the projector according to the fourth embodiment includes the light emitter 10, the light-incident-side polarizing element 80, the pickup lens 30, the parallelizing lens 35, the light modulator 40, the light-exiting-side polarizing element 50, and the projection system 70, as the projector 101 according to the first embodiment does.

FIG. 5 is a schematic view illustrating the configurations of the light emitter 10 and the light-incident-side polarizing element 80 and the behavior of the light in the fourth embodiment. In the projector according to the fourth embodiment, the light emitter 10 is formed of the substrate 11, the light sources 12, the wavelength converter 13, and a dichroic mirror 16, as shown in FIG. 5. The dichroic mirror 16 is disposed on the optical path of the blue light BL between the plurality of light sources 12 and phosphor layer 14, which is the wavelength converter 13. The dichroic mirror 16 has a light incident surface 16a, which faces the plurality of light sources 12 and is separate from the light emitting surfaces 12s of the plurality of light sources 12 in the direction Z. The phosphor layer 14 is provided at a light exiting surface 16b of the dichroic mirror 16, which is opposite from the light incident surface 16a. That is, the light incident surface 14a of the phosphor layer 14 is in contact with the light exiting surface 16b of the dichroic mirror 16. The light-incident-side polarizing element 80 is provided at the light emitting surface 14s of the phosphor layer 14. That is, the incident surface 82a of the polarizing plate 82, which forms the light-incident-side polarizing element 80, is in contact with the light emitting surface 14s of the phosphor layer 14, which forms the wavelength converter 13.

The first embodiment has been described with reference to FIG. 2 primarily in terms of the behavior of the yellow light YL radially emitted via the light emitting surface 14s of the phosphor layer 14 toward the light-incident-side polarizing element 80. The phosphor layer 14, however, omnidirectionally emits the yellow light YL with the blue light BL emitted from the plurality of light sources 12 used as the excitation light. That is, the phosphor layer 14 emits the yellow light YL also toward the light sources 12. In the fourth embodiment, the dichroic mirror 16 transmits the blue light BL containing the blue light BL1 emitted from the light sources 12, and reflects yellow light YL6, which exits toward the light sources 12 out of the yellow light YL emitted from the phosphor layer 14. The yellow light YL6 corresponds to the "at least part of the second light" described in the claims, which will be described later. At least part of yellow light YL7 reflected off the dichroic mirror 16 passes through the phosphor layer 14, travels along the same optical path of the yellow light YL1 described in the first embodiment, and behaves in the same manner as the yellow light YL1 does. The remainder of the yellow light YL7 reflected off the dichroic mirror 16 is internally scattered in the phosphor layer 14.

The dichroic mirror 16 reflects the yellow light YL3 polarized in the directions other than the predetermined polarization direction, which has been reflected off the light-incident-side polarizing element 80 and has passed through the phosphor layer 14. Yellow light YL8 reflected off the dichroic mirror 16 travels along the same optical path of the yellow light YL7 described above. The dichroic mirror 16 reflects the yellow light YL including the yellow light YL3 and YL6.

The projector according to the fourth embodiment provides the same effects as those provided by the projector 101 according to the first embodiment. The projector according to the fourth embodiment further includes the dichroic mirror 16 disposed between the light sources 12 and the wavelength converter 13. The dichroic mirror 16 transmits the blue light BL and reflects at least part of the yellow YL. The projector according to the fourth embodiment, in which the yellow light YL having been reflected off the light-incident-side polarizing element 80 and having passed through the wavelength converter 13 is reflected off the dichroic mirror 16, allows an increase in the efficiency of utilization of the yellow light YL.

In addition, the projector according to the fourth embodiment, in which the light-incident-side polarizing element 80 is in contact with the wavelength converter 13 in the light emitter 10 as in the projector according to the second embodiment, allows an increase in the amount of white light WL reflected off the light-incident-side polarizing element 80 and entering the wavelength converter 13, as compared with the projector 101 according to the first embodiment.

As a variation of the fourth embodiment, a light transmissive member 18 may be provided at the light incident surface 16a of the dichroic mirror 16 in the light emitter 10, as indicated by the broken line in FIG. 5. The light transmissive member 18 has a light incident surface 18a and a light exiting surface 18b parallel to the light incident surface 16a of the dichroic mirror 16. That is, the light exiting surface 18b of the light transmissive member 18 is in contact with the light incident surface 16a of the dichroic mirror 16. The light incident surface 18a of the light transmissive member 18 is separate from the light emitting surfaces 12s of the plurality of light sources 12 in the direction Z.

The light transmissive member 18 serves as a support of the dichroic mirror 16, the phosphor layer 14, which forms the wavelength converter 13, and the light-incident-side polarizing element 80. That is, the light transmissive member 18 is a member that supports the dichroic mirror 16. In particular, the size, that is, the thickness of the dichroic mirror 16 in the direction Z is, for example, about 0.1 mm, which is thinner than the phosphor layer 14 and the light-incident-side polarizing element 80. Providing the light transmissive member 18 therefore allows at least the dichroic mirror 16 to be disposed in a stable manner. For example, the dichroic mirror 16 may be formed by deposition of powdery material of the dichroic mirror 16 at the light exiting surface 18b of the light transmissive member 18 in an evaporation process.

The light transmissive member 18 is made of a material that transmits at least the blue light BL, and is also transparent to light in the visible wavelength band and containing the blue light BL and the yellow light YL. The light transmissive member 18 may be made, for example, of optical glass or quartz, or may instead be made of sapphire, which excels in heat dissipation. In other words, using a member that transmits at least the blue light BL and has high heat dissipation capability as the light transmissive member 18 allows improvement in the heat dissipation capability of the light emitter in the projector according to the variation of the fourth embodiment.

In the variation of the fourth embodiment, the dichroic mirror 16 and the light transmissive member 18 shown in FIG. 5 may be swapped in terms of arrangement. That is, the dichroic mirror 16 may be provided at the light incident surface 18a of the light transmissive member 18, and the light exiting surface 18b of the light transmissive member 18 may be in contact with the light incident surface 14a of the phosphor layer 14, which forms the wavelength converter 13. In this case, the light transmissive member 18 transmits at least the blue light BL and the yellow light YL. The configuration described above can still provide the same effects as those provided by the variation of the fourth embodiment described above.

### Fifth embodiment

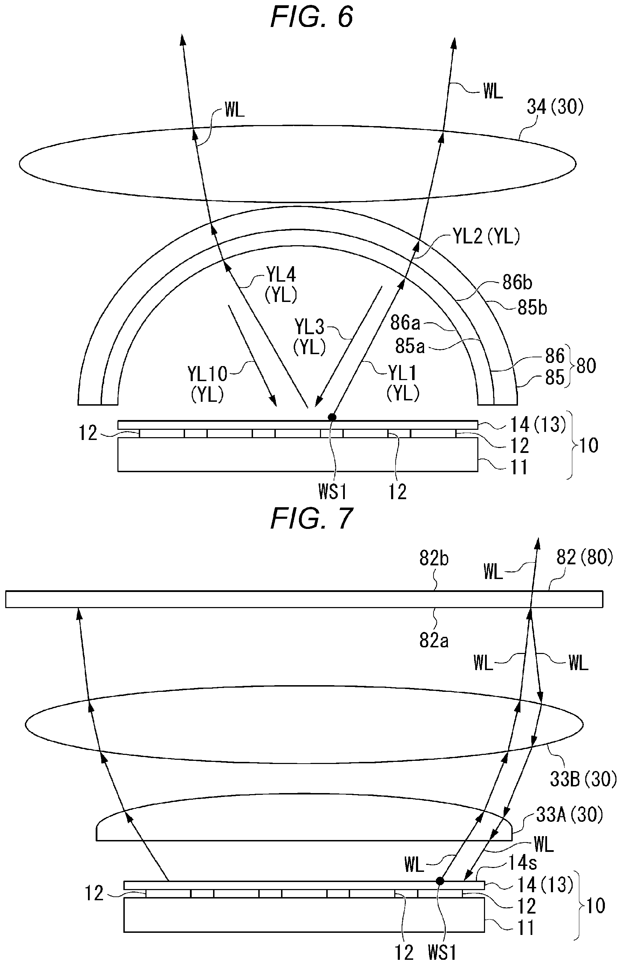

A fifth embodiment of the present disclosure will next be described with reference to FIG. 6. Although not shown, the projector according to the fifth embodiment includes the light emitter 10, the light-incident-side polarizing element 80, the pickup lens 30, the parallelizing lens 35, the light modulator 40, the light-exiting-side polarizing element 50, and the projection system 70, as the projector 101 according to the first embodiment does.

FIG. 6 is a schematic view illustrating the configurations of the light emitter 10, the light-incident-side polarizing element 80, and the pickup lens 30 and the behavior of the light in the fifth embodiment. In the projector according to the fifth embodiment, the light-incident-side polarizing element 80 includes a base 85 and a reflective polarizing layer 86, as shown in FIG. 6. The base 85 is formed to be larger in the plane XY than the phosphor layer 14, which forms the wavelength converter 13, in the light emitter 10. The base 85 is formed in a hemispherical or domical shape, and has a convex curved surface that is separate from the phosphor layer 14 by a greater distance at a position farther from the periphery toward the center when viewed along the direction Z. The base 85 has a convex curved surface 85a, on which the white light WL emitted from the phosphor layer 14 is incident, and a convex curved surface 85b, via which the white light WL having passed through the base 85 exits. The base 85 is made of a material that transmits light in the visible wavelength band of the white light WL, for example, optical glass, quartz, or sapphire. Note that the base 85 may be a film-shaped base capable of retaining its shape.

The reflective polarizing layer 86 is provided at the convex curved surface 85a of the base 85. The polarizing layer 86, which is supported by the base 85, is disposed in such a way that the polarizing layer 86 is smaller than the base 85 but one size larger than the phosphor layer 14, which forms the wavelength converter 13, in the plane XY, so that the polarizing layer 86 surrounds the phosphor layer 14 and covers the phosphor layer 14. The polarizing layer 86 has a light incident surface 86a facing the light emitting surface 14s of the phosphor layer 14, and a light exiting surface 86b opposite from the light incident surface 86a. The light exiting surface 86b of the polarizing layer 86 is in contact with the convex curved surface 85a of the base 85. The polarizing layer 86 transmits the light polarized in the predetermined polarization direction out of the white light WL emitted from the light emitter 10, and reflects the light polarized in the directions other than the predetermined polarization direction, as the polarizing plate 82 does. The light polarizing layer 86 is sensitive to the visible wavelength band.

The pickup lens 30 in the fifth embodiment is disposed on the optical path of the white light WL polarized in the predetermined polarization direction and having passed through the incident-side polarizing element 80 at a position between the light-incident-side polarizing element 80 and the parallelizing lens 35, which is not shown in FIG. 6. The pickup lens 30 is a biconvex lens 21. The biconvex lens 21 has a convex curved surface that is convex toward the side at which the white light WL that exits out of the light-incidence-side polarizing element 80 and enters the biconvex lens 21 is incident, and another convex curved surface that is convex toward the side via which the white light WL exits.

In the phosphor layer 14, which forms the wavelength converter 13, in the light emitter 10, the yellow light YL1 radially emitted from the wave source WS1 at an any position on the light emitting surface 14s enters the polarizing layer 86 via the light incident surface 86a. Out of the white light WL having entered the polarizing layer 86, the yellow light YL2 polarized in the predetermined polarization passes through the polarizing layer 86 and the base 85, and enters the pickup lens 30. Out of the white light WL having entered the polarizing layer 86, the yellow light YL3 polarized in the directions other than the predetermined polarization direction is reflected off the polarizing layer 86 and radiated to a position close to the wave source WS1 at the light emitting surface 14s of the phosphor layer 14. The position close to the wave source WS1 at the light emitting surface 14s means a position separate from the wave source WS1 by a distance at least shorter than the separation distance in the plane XY between the wave source WS1 and the position where the light incident surface 86a of the polarizing layer 86 is irradiated with the yellow light YL1. Although not shown, the blue light BL1 emitted via the light emitting surfaces 12s of the plurality of light sources 12 also travels the same optical path of the yellow light YL1 described above.

The yellow light YL3 with which the light emitting surface 14s of the phosphor layer 14 is irradiated from the polarizing layer 86 at a position close to the wave source WS1 of the incident-side polarizing element 80 is internally scattered in the phosphor layer 14. The blue light BL3 with which the light emitting surface 14s of the phosphor layer 14 is irradiated from the polarizing layer 86 at a position substantially the same as the position irradiated with the yellow light YL3 acts as the excitation light in the phosphor layer 14 to excite the phosphor layer 14 again. The yellow light YL4 thus exits from the position substantially the same as the position of the wave source WS1. The yellow light YL4 enters the polarizing layer 86 again. Out of the yellow light YL4 having entered the polarizing layer 86, the light polarized in the predetermined polarization direction passes through the polarizing layer 86 and the base 85 and enters the pickup lens 30. Out of the yellow light YL4 having entered the polarizing layer 86, yellow light YL10 polarized in the directions other than the predetermined polarization direction is reflected off the polarizing layer 86 and radiated to the position close to the wave source WS1 at the light emitting surface 14s of the phosphor layer 14.

Since the light-incident-side polarizing element 80 having the domical shape covers the light-emitting surface 14s of the phosphor layer 14, which forms the wavelength converter 13, as described above, a position close to the wave source WS1 at the light emitting surface 14s of the phosphor layer 14 is irradiated with the yellow light YL and the blue light BL reflected off the light-incident-side polarizing element 80 toward the phosphor layer 14. As a result, the white light WL reflected off the light-incident-side polarizing element 80 and polarized in the directions other than the predetermined polarization direction concentrates at the position close to the wave source WS1 on the light emitting surface 14s of the phosphor layer 14.

The projector according to the fifth embodiment provides the same effects as those provided by the projector 101 according to the first embodiment. In the projector according to the fifth embodiment, the light-incident-side polarizing element 80 is provided at the phosphor layer 14, which forms the wavelength converter 13, in the light emitter 10 and has a domical shape that covers the light emitting surface 14s opposite from the light incident surface 14a, which faces the light sources 12. The configuration described above can reduce the amount of white light WL lost when reflected off the light-incident-side polarizing element 80 toward the region outside the wavelength converter 13 in the plane XY, and causes the light-emitting surface 14s of the phosphor layer 14, which forms the wavelength converter 13, to be irradiated with a greater amount of the white light WL emitted from the wavelength converter 13 and then reflected off the reflective light-incident-side polarizing element 80, as compared with the case where the light emitting surface of the wavelength converter 13 and the light incident surface and the light exiting surface of the light-incident-side polarizing element 80 are parallel to the light emitting surface of the wavelength converter 13 as shown, for example, in the first embodiment. The light utilization efficiency in the projector according to the fifth embodiment can thus be improved.

Although not shown, as a variation of the fifth embodiment, a dichroic mirror providing the same effect as that provided by the dichroic mirror 16 described in the fourth embodiment may be provided between the plurality of light sources 12 and the wavelength converter 13. In this case, the dichroic mirror reflects the yellow light YL having been reflected off the light-incident-side polarizing element 80 and having passed through the wavelength converter 13, so that the efficiency of utilization of the yellow light YL can be increased. Furthermore, in the configuration described above, a light transmissive member providing the same effect as that provided by the light transmissive member 18 described in the fourth embodiment may be provided between the plurality of light sources 12 and the dichroic mirror, or between the dichroic mirror and the wavelength converter 13. The dichroic mirror can thus be disposed in a stable manner.

### Sixth embodiment

A sixth embodiment of the present disclosure will next be described with reference to FIG. 7. Although not shown, the projector according to the sixth embodiment includes the light emitter 10, the pickup lens 30, the light-incident-side polarizing element 80, the parallelizing lens 35, the light modulator 40, the light-exiting-side polarizing element 50, and the projection system 70, as the projector 101 according to the first embodiment does.

FIG. 7 is a schematic view illustrating the configurations of the light emitter 10, the pickup lens 30, and the light-incident-side polarizing element 80 and the behavior of the light in the sixth embodiment. In the light emitter 10 in the sixth embodiment, the light-incident-side polarizing element 80 is provided at the light emitting surface 14s of the phosphor layer 14 , which forms the wavelength converter 13, in the light emitter 10, as shown in FIG. 7, as in the light emitter 10 in the second embodiment. That is, the incident surface 82a of the polarizing plate 82, which forms the light-incident-side polarizing element 80, is in contact with the light emitting surface 14s of the phosphor layer 14 , which forms the wavelength converter 13.

The pickup lens 30 in the sixth embodiment is disposed on the optical path of the white light WL, which contains the yellow light YL and the blue light BL emitted from the wavelength converter 13 in the light emitter 10, between the wavelength converter 13 and the light-incident-side polarizing element 80. The pickup lens 30 is formed, for example, of a plano-convex lens 33A and a biconvex lens 33B. The plano-convex lens 33A has a surface parallel to the plane XY and a convex curved surface that is convex toward the side toward which the white light WL emitted from the wavelength converter 13 and entering the plano-convex lens 33A exits. The biconvex lens 33B has a convex curved surface that is convex toward the side at which the white light WL that exits out of the plano-convex lens 33A and enters the biconvex lens 33B is incident, and another convex curved surface that is convex toward the side via which the white light WL exits.

The light-incidence-side polarizing element 80 in the sixth embodiment is disposed on the optical path of the white light WL having exited out of the pickup lens 30 and between the wavelength converter 13 and the parallelizing lens 35, which is not shown in FIG. 7.

The white light WL having exited in the form of diffused light via the light emitting surface 14s of the phosphor layer 14 , which forms the wavelength converter 13, in the light emitter 10 enters the plano-convex lens 33A, which forms the pickup lens 30. The plano-convex lens 33A enlarges the incident white light WL in the plane XY in accordance with the shape and other factors of the convex curved surface of the lens, and the enlarged white light WL exits via the convex curved surface. The white light WL having exited out of the plano-convex lens 33A enters the biconvex lens 33B. The biconvex lens 33B further enlarges the incident white light WL in the plane XY in accordance with the shape and other factors of the light-incident-side convex curved surface of the lens, and the enlarged white light WL exits via the light-exiting-side convex curved surface.

The white light WL having exited out of the pickup lens 30 is incident on the light polarizing plate 82, which forms the light-incident-side polarizing 80. Out of the white light WL incident on the light-incident-side polarizing element 80, the light polarized in the predetermined polarization direction passes through the light-incident-side polarizing element 80 and exits out of the light-incident-side polarizing element 80 toward the parallelizing lens 35 that is not shown. Out of the white light WL incident on the light-incident-side polarizing element 80, the light polarized in the directions other than the predetermined polarization direction is reflected off the light-incident-side polarizing element 80, passes through the pickup lens 30, which reduces the polarized light in size in the plane XY, and the reduced polarized light enters the wavelength converter 13 via the light emitting surface 14s of the phosphor layer 14. The white light WL polarized in the directions other than the predetermined polarization direction and reflected off the light-incident-side polarizing element 80 travels along an optical path substantially the same as the optical path of the white light WL from the light emitting surface 14s of the phosphor layer 14 , which forms the wavelength converter 13, to the light incident surface 82a of the polarizing plate 82, which forms the light-incident-side polarizing element 80, but in the opposite direction of the direction of the white light WL from the light emitting surface 14s to the light incident surface 82a.

As described in each of the aforementioned embodiments, the yellow light YL out of the white light WL reflected off the light-incident-side polarizing element 80 and entering the wavelength converter 13 is internally scattered in the phosphor layer 14, and part of the yellow light YL exits out of the wavelength converter 13 toward the pickup lens 30. The blue light BL out of the white light WL reflected off the light-incident-side polarizing element 80 and entering the wavelength converter 13 acts as the excitation light in the phosphor layer 14, and the yellow light YL generated by the re-excitation also exits out of the wavelength converter 13 toward the pickup lens 30.

The projector according to the sixth embodiment provides the same effects as those provided by the projector 101 according to the first embodiment. In the projector according to the sixth embodiment, the light-incident-side polarizing element 80 is disposed on the optical path of the white light WL between the pickup lens 30 and the parallelizing lens 35. The projector according to the sixth embodiment readily allows a large space where the light-incident-side polarizing element 80 is disposed to be secured so that the light-incident-side polarizing element 80, a member that is not shown but supports the light-incident-side polarizing element 80, and other components are readily disposed, as compared with the case where the light-incident-side polarizing element 80 is disposed on the optical path of the white light WL between the wavelength converter 13 in the light emitter 10 and the pickup lens 30, as in the projector according to the first embodiment.

Furthermore, the projector according to the sixth embodiment, in which the light-incident-side polarizing element 80 is in contact with the wavelength converter 13 in the light emitter 10 as in the projector according to the second embodiment, allows an increase in the amount of white light WL reflected off the light-incident-side polarizing element 80 and entering the wavelength converter 13, as compared with the projector 101 according to the first embodiment.

### Seventh embodiment

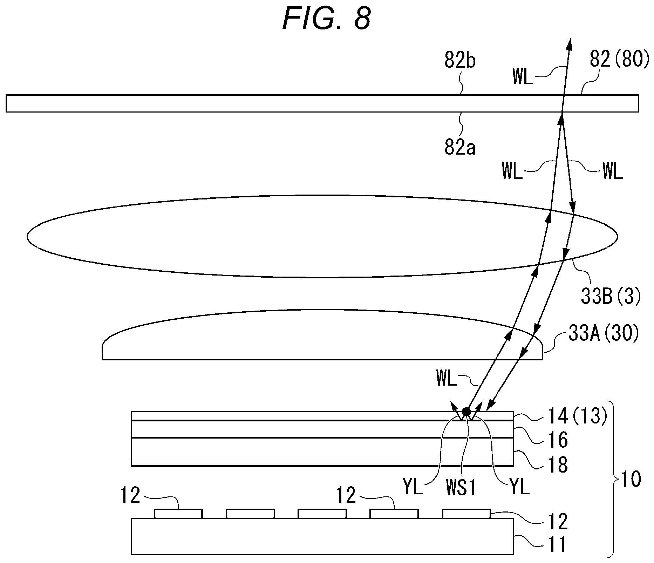

A seventh embodiment of the present disclosure will next be described with reference to FIG. 8. Although not shown, the projector according to the seventh embodiment includes the light emitter 10, the pickup lens 30, the light-incident-side polarizing element 80, the parallelizing lens 35, the light modulator 40, the light-exiting-side polarizing element 50, and the projection system 70, as the projector according to the sixth embodiment does.

FIG. 8 is a schematic view illustrating the configurations of the light emitter 10, the pickup lens 30, and the light-incident-side polarizing element 80 and the behavior of the light in the seventh embodiment. The light emitter 10 in the seventh embodiment includes the substrate 11, the light sources 12, the wavelength converter 13, the dichroic mirror 16, and the light transmissive member 18, as the light emitter 10 in the variation of the fourth embodiment does, as shown in FIG. 8. That is, the light incident surface 14a of the phosphor layer 14, which forms the wavelength converter 13, is separate from the light emitting surfaces 12s of the plurality of light sources 12 in the direction Z. The dichroic mirror 16 and the light transmissive member 18 are disposed on the optical path of white light WL between the plurality of light sources 12 and the wavelength converter 13. The light incident surface 18a of the light transmissive member 18 is separate from the light emitting surfaces 12s of the plurality of light sources 12 in the direction Z. The dichroic mirror 16 is provided at the light exiting surface 18b of the light transmissive member 18. The light-incident-side polarizing element 80 is provided at the light exiting surface 16b of the dichroic mirror 16. The light exiting surface 18b of the light transmissive member 18 and the light incident surface 16a of the dichroic mirror 16 are in contact with each other, and the light exiting surface 16b of the dichroic mirror 16 and the light incident surface 14a of the phosphor layer 14 are in contact with each other.

The projector according to the seventh embodiment provides the same effects as those provided by the projector according to the sixth embodiment. Furthermore, since the projector according to the seventh embodiment further includes the dichroic mirror 16 disposed between the light sources 12 and the wavelength converter 13, the yellow light YL having been light reflected off the light-incident-side polarizing element 80 and having passed through the wavelength converter 13 is reflected off the dichroic mirror 16, so that the efficiency of the utilization of the yellow light YL can be increased, and the light utilization efficiency in the projector according to the seventh embodiment can be increased. Moreover, in the projector according to the seventh embodiment, in which the light transmissive member 18 is provided at the light incident surface 16a of the dichroic mirror 16, the dichroic mirror 16 and the phosphor layer 14 are disposed in a stable manner. Using a member that transmits at least the blue light BL and has high heat dissipation capability as the light transmissive member 18 allows improvement in the heat dissipation capability of the light emitter 10 in the projector according to the seventh embodiment.

### Eighth embodiment

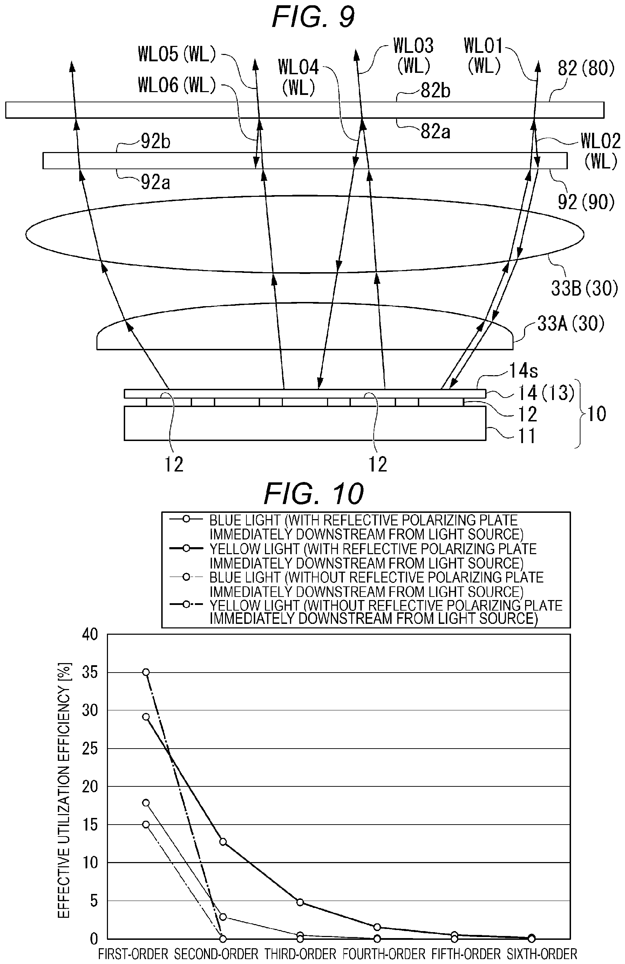

An eighth embodiment of the present disclosure will next be described with reference to FIG. 9. Although not shown, the projector according to the eighth embodiment includes the light emitter 10, the pickup lens 30, the light-incident-side polarizing element 80, the parallelizing lens 35, the light modulator 40, the light-exiting-side polarizing element 50, and the projection system 70, as the projector according to the sixth embodiment does, and further includes a phase retarder 90.

FIG. 9 is a schematic view illustrating configurations of the light emitter 10, the pickup lens 30, the phase retarder 90, and the light-incident-side polarizing element 80 and the behavior of the light in the eighth embodiment. The phase retarder 90 is disposed on the optical path of the white light WL between the biconvex lens 33B, which forms the pickup lens 30, and the polarizing plate 82, which forms the light-incident-side polarizing element 80, as shown in FIG. 9. The phase retarder 90 is not limited to a specific member and may be any member capable of imparting a predetermined phase retardation to the nonlinearly polarized white light WL having exited out of the biconvex lens 33B, and is preferably, for example, a quarter-wave plate. The eighth embodiment will be described with reference to the assumption that the phase retarder 90 is a quarter-wave plate 92.

The white light WL having exited out of the pickup lens 30 enters the phase retarder 90 before entering the light-incident-side polarizing element 80. The phase retarder 90 imparts the predetermined phase retardation to the incident white light WL, and converts the white light WL into light polarized in a polarization direction according to the phase retardation. Since the phase retarder 90 is the quarter-wave plate 92, the predetermined phase retardation is 1/4 of the wavelength of the incident light, that is, π/2. For example, when P-polarized or S-polarized white light WL enters the quarter-wave plate 92, which forms the phase retarder 90, the quarter-wave plate 92 converts the incident white light WL into elliptically or circularly polarized white light WL, and the elliptically or circularly polarized white light WL exits out of the quarter-wave plate 92.

When the blue light BL emitted from the plurality of light sources 12 in the light emitter 10 has a high degree of randomness in terms of nonlinear polarization, the phosphor layer 14, which forms the wavelength converter 13, has a low polarization conversion capability, and the white light WL emitted from the phosphor layer 14 has a high degree of randomness as those of the blue light BL and the yellow light YL entering the phosphor layer 14, the white light WL having a high degree of randomness in terms of nonlinear polarization first enters the quarter-wave plate 92, which forms the phase retarder 90, via the light incident surface 92a, and a phase retardation of π/2 is imparted to the white light WL. The quarter-wave plate 92 outputs the linearly polarized white light WL. In this case, it is preferable that the fast or slow axis, which is not shown, of the quarter-wave plate 92 is appropriately so set that the polarization direction of most of the linearly polarized white light WL that exits out of the quarter-wave plate 92 is substantially the same as the predetermined polarization direction of the light passing through the polarizing plate 82, which forms the light-incident-side polarizing element 80. The amount of white light WL polarized in the predetermined polarization direction and passing through the light-incident-side polarizing element 80 thus increases.

When the white light WL having exited out of the quarter-wave plate 92 enters the polarizing plate 82, which forms the light-incident-side polarizing element 80, the light polarized in the predetermined polarization direction out of the incident white light WL passes through the polarizing plate 82, and exits toward the parallelizing lens 35, which is not shown in FIG. 9. Out of the white light WL having entered the polarizing plate 82, the light polarized in the directions other than the predetermined polarization direction is reflected off the polarizing plate 82 and enters the quarter-wave plate 92.

White light WLO2 having been reflected off the polarizing plate 82 and having entered the quarter-wave plate 92 passes through the quarter-wave plate 92, which imparts the phase retardation of π/2 to the white light WLO2. For example, when most of the white light WLO2 is light linearly polarized in the direction perpendicular to the predetermined polarization direction in the plane XY, the quarter-wave plate 92 converts the white light WLO2 into circularly polarized light containing elliptical polarized light. The quarter-wave plate 92 outputs toward the pickup lens 30 white light WL according to the polarization state of the white light WLO2 reflected off the polarizing plate 82, that is, the white light WL resulting from the impartation of the phase retardation of π/2 to the white light WLO2 reflected off the polarizing plate 82. The white light WL having exited out of the quarter-wave plate 92 toward the pickup lens 30 travels along an optical path substantially the same as the optical path of the white light WL that enters the quarter-wave plate 92 from the wavelength converter 13 via the pickup lens 30 in the opposite direction of the white light WL entering the quarter-wave plate 92, is reduced in size in the plane XY by the pickup lens 30, and enters the phosphor layer 14, which forms the wavelength converter 13, via the light emitting surface 14s.

As described in each of the aforementioned embodiments, the blue light BL out of the white light WL having entered the phosphor layer 14 via the light emitting surface 14s acts as the excitation light to generate the yellow light YL. Out of the white light WL having entered the phosphor layer 14 via the light emitting surface 14s, the yellow light YL is internally scattered in the phosphor layer 14. As described above, since the phosphor layer 14 has a low polarization conversion capability, the polarization state of the white light WL resulting from the white light WLO2 and emitted via the light emitting surface 14s of the phosphor layer 14 to the pickup lens 30 is substantially the same as the polarization state of the white light WL resulting from the white light WLO2 and entering the phosphor layer 14.

The white light WL resulting from the white light WLO2 and emitted from the phosphor layer 14 to the pickup lens 30 passes through the pickup lens 30 and enters the quarter-wave plate 92. The phase retardation of π/2 is imparted to the white light WL having entered the quarter-wave plate 92. The white light WL having exited out of the quarter-wave plate 92 then enters the polarizing plate 82, which forms the light-incident-side polarizing element 80. Out of the incident white light WL, the light polarized in the predetermined polarization direction passes through the polarizing plate 82, and the light polarized in the directions other than the predetermined polarization is reflected off the polarizing plate 82. For example, when most of the white light WLO2 is the light linearly polarized in the direction perpendicular to the predetermined polarization direction in the plane XY, the white light WL resulting from the white light WLO2 and having been emitted from the phosphor layer 14 and having entered quarter-wave plate 92 is converted by the quarter-wave plate 92 into the light linearly polarized in the predetermined polarization direction. Most of the white light WL thus converted into the light linearly polarized in the predetermined polarization direction by the quarter-wave plate 92 passes through the polarizing plate 82.

White light WLO4 reflected off the polarizing plate 82 for the second time and polarized in the directions other than the predetermined polarization direction travels along the optical path at a position different in the plane XY from the position of the optical path of the white light WLO2 in the same manner in which the white light WLO2 and the white light WL resulting from the white light WLO2 travel in the direction Z.

FIG. 10 shows graphs illustrating examples of the result of a numerical simulation of calculation of the efficiency of effective use of the yellow light YL and the blue light BL contained in each of first-order white light WL to sixth-order white light WL in the projector according to any one of the first to eighth embodiments. Note that the efficiency of the effective use of the first-order yellow light YL and blue light BL represents the efficiency of effective use of the yellow light YL and the blue light BL passing through the light-incident-side polarizing element 80 first, that is, for the first time. The efficiency of effective use of the second-order yellow light YL and blue light BL to the sixth-order yellow light YL and blue light BL represents the efficiency of effective use of the yellow light YL and the blue light BL passing through the light-incident-side polarizing element 80 for the second time to the sixth time after reflected off the light-incident-side polarizing element 80. FIG. 10 also shows the result of the calculation of the efficiency of effective utilization of the blue light BL and the yellow light YL contained in the white light WL, that is, the first-order white light WL01 to the sixth-order white light WLO6 in an estimated configuration as a reference in which the light-incident-side polarizing element 80 is not disposed on the optical path of the white light WL at a position downstream from the light emitter 10 in the projectors according to the first to eighth embodiments.

The notation "with reflective polarizing plate immediately downstream from light source" in FIG. 10 shows the result of the calculation in the configuration in which the light-incident-side polarizing element 80 is provided as in the projectors according to the first to eighth embodiments. The notation "without reflective polarizing plate immediately downstream from light source" in FIG. 10 shows the result of the calculation in the configuration of the reference example in which the light-incident-side polarizing element 80 is not provided. The notation "immediately downstream from light source" in FIG. 10 means a stage downstream from the light sources 12 via the phosphor layer 14, which is the wavelength converter 13, but upstream from components other than the wavelength converter 13, such as the pickup lens 30. In both of the cases described by the notations "with reflective polarizing plate immediately downstream from light source" and "without reflective polarizing plate immediately downstream from light source" in FIG. 10, it is assumed that an absorptive polarizing element is disposed between the parallelizing lens 35 and the liquid crystal device 43, as described in the first embodiment. Specifically, in the present calculation, the wire grid polarizer 84 is used as the light-incident-side polarizing element 80, and the reflection axis of the wire grid polarizer 84 is aligned with the absorption axis of the absorptive polarizing element, which is not shown.

The efficiency of effective utilization of the first-order yellow light YL is higher than the efficiency of effective utilization of the second-order and higher-order yellow light YL, as shown in FIG. 10. In the projector provided with the light-incident-side polarizing element 80, the reflective polarizing plate 82 or the wire grid polarizer 84 is disposed as the light-incident-side polarizing element 80 on the optical path of the white light WL immediately downstream from the light emitter 10, so that a larger amount of white light WL reflected off the light-incident-side polarizing element 80 returns to the light emitter 10, enters the wavelength converter 13, and is scattered therein. The efficiency of effective utilization of the second-order yellow light YL, although being lower than the efficiency of effective utilization of the first-order yellow light YL, can therefore be achieved to some extent. As the order increases, the efficiency of effective utilization of the yellow light YL decreases, that is, the efficiency of effective utilization of the yellow light YL decreases approximately quadratically. For example, the second-order yellow light YL to the fifth-order yellow light YL can be effectively utilized in the optical modulator 40 disposed downstream from the light-incident-side polarizing element 80.

On the other hand, in the reference example, in which the light-incident-side polarizing element 80 is not provided, the efficiency of effective utilization of the first-order yellow light YL is higher by the amount corresponding to the optical loss that occurs at the light-incident-side polarizing element 80 than the efficiency in the projector having the configuration in which the light-incident-side polarizing element 80 is provided. In the reference example, in which the light-incident-side polarizing element 80 is not provided, however, the absorptive polarizing plate disposed between the parallelizing lens 35 and the liquid crystal device 43 absorbs the polarized light of part of the white light WL, so that at least the white light WL does not return to the light emitter 10 and does not enter the wavelength converter 13. The efficiency of effective utilization of the second-order yellow light YL is therefore approximately 0%. That is, in the reference example, in which the light-incident-side polarizing element 80 is not provided, the second-order and higher-order yellow light YL is not effectively used in the light modulator 40. The reference example, in which the light-incident-side polarizing element 80 is not provided, shows that with all the orders considered, the efficiency of effective utilization of the yellow light YL is lower than the efficiency in the configuration of the projector in which the light-incident-side polarizing element 80 is provided as described in the first to eighth embodiments.

When the white light WL has normally used chromaticity as described in the first embodiment, the amount of blue light BL emitted from the light sources 12 and passing through the wavelength converter 13 is relatively smaller than the amount of yellow light YL emitted from the wavelength converter 13. The efficiency of effective utilization of the first-order blue light BL is therefore lower than the efficiency of effective utilization of the first-order yellow light YL. The efficiency of effective utilization of the blue light BL and the efficiency of effective utilization of the yellow light YL, however, change in the same manner as the order increases from the second order to a higher order. That is, in the projector provided with the light-incident-side polarizing element 80, the higher the order, the lower the efficiency of effective utilization of the blue light BL. However, the efficiency of effective utilization of the blue light BL decreases approximately quadratically, and the second-order blue light BL to the fourth-order blue light BL, for example, can be effectively used in the light modulator 40 disposed downstream from the light-incident-side polarizing element 80. On the other hand, in the reference example, in which the light-incident-side polarizing element 80 is not provided, the second-order and higher-order blue light BL is not effectively used in the light modulator 40. The reference example, in which the light-incident-side polarizing element 80 is not provided, shows that with all the orders considered, the efficiency of effective utilization of the blue light BL is also lower than the efficiency in configuration of the projector in which the light-incident-side polarizing element 80 is provided. It is assumed in the present calculation that the wire grid polarizer 84 is used as the light-incident-side polarizing element 80, and the same result is provided even when it is assumed that the polarizing plate 82 is used as the light-incident-side polarizing element 80 as described in the plurality of aforementioned embodiments. That is, it can be said that the effect confirmed by the present calculation is a common effect regardless of whether the light-incident-side polarizing element 80 is the polarizing plate 82 or the wire grid polarizer 84, and is an effect provided common to the projectors according to the first to eighth embodiments.

The projector according to the eighth embodiment described above provides the same effects as those provided by the projector according to the sixth embodiment. The projector according to the eighth embodiment further includes the phase retarder 90 disposed between the wavelength converter 13 and the light-incident-side polarizing element 80. The phase retarder 90 imparts the predetermined retardation to the white light WL incident thereon. The projector according to the eighth embodiment, in which the phase retarder 90 modulates the phase of the light resulting from the light reflected off the light-incident-side polarizing element 80 and having exited out of the wavelength converter 13, can suppress a significant decrease in the efficiency of effective utilization of the blue light BL and the yellow light YL in the light-incident-side polarizing element 80, that is, the transmittance thereof.

In the projector according to the eighth embodiment, the phase retarder 90 is the quarter-wave plate 92. In the projector according to the eighth embodiment, the phase retardation of π/2 is imparted to the blue light BL and the yellow light YL contained in the white light WL polarized in the direction perpendicular to the predetermined polarization direction in the plane XY out of the white light WL reflected off the light-incident-side polarizing element 80, the phase retardation of π/2 being equal to a phase retardation of 1/4 of the wavelengths at which the blue light BL and the yellow light YL are emitted. The light-incident-side polarizing element 80 imparts the phase retardation of π/2 also to the white light WL resulting from the white light WL polarized in the direction perpendicular to the predetermined polarization direction and emitted from the wavelength converter 13. In the projector according to the eighth embodiment, the light-incident-side polarizing element 80 can convert the white light WL resulting from the white light WL polarized in the direction perpendicular to the predetermined polarization direction and emitted from the wavelength converter 13 into the light polarized in the predetermined polarization direction, so that the resultant polarized light can pass through the light-incident-side polarizing element 80. That is, the projector according to the eighth embodiment, in which the quarter-wave plate 92 is used as the phase retarder 90, can preferably suppress the significant decrease in the efficiency of effective utilization of the blue light BL and the yellow light YL in the light-incident-side polarizing element 80, that is, the transmittance thereof.

Although the above description has been made with reference to the case where the quarter-wave plate 92 is preferable as the phase retarder 90, the phase retarder 90 only needs to be capable of modulating even by a small amount the phase of the light resulting from the light reflected off the light-incident-side polarizing element 80 and emitted from the wavelength converter 13. As long as the phase retarder 90 can modulate the phase of the incident light even by a small amount, the aforementioned effects provided by the projector according to the eighth embodiment can be provided by not a little degree. The phase retarder 90 may instead, for example, be a quartz plate having a predetermined thickness. Once the predetermined thickness is determined, the phase retardation imparted to the light incident on the quartz plate in accordance with the wavelength of the light is calculated. The predetermined thickness of the quartz plate can therefore be set in consideration of the predetermined phase retardation required for the phase retarder 90, the wavelength at which the blue light BL is emitted, the wavelength at which the yellow light YL is emitted, and other factors.

When the wavelength converter 13 in the light emitter 10 has a low polarization conversion capability, the projector according to the eighth embodiment prominently provides an effect of suppressing the significant decrease in the transmittance of the light-incident-side polarization element 80 for the blue light BL and the yellow light YL as described above. In the embodiments described above including the projector according to the eighth embodiment, the light sources 12 in the light emitter 10 emit the nonlinearly polarized blue light BL. Therefore, for example, when 50% or less of the light that enters the wavelength converter 13 has a specific polarization state other than linear polarization or nonlinear polarization, preferably when 20% or less of the light that enters the wavelength converter 13 has a specific polarization state other than nonlinear polarization, employing the configuration of the projector according to the eighth embodiment can reliably suppress the significant decrease in the transmittance of the light-incident-side polarizing element 80 for the blue light BL and the yellow light YL.

Although not shown, the phase retarder 90 may be in contact with the light-incident-side polarizing element 80 as a variation of the eighth embodiment. Specifically, the light exiting surface 92b of the quarter-wave plate 92, which forms the phase retarder 90, may be in contact with the light incident surface 82a of the polarizing plate 82, which forms the light-incident-side polarizing element 80. The projector according to the variation of the eighth embodiment can provide, in addition to the aforementioned effects provided by the projector according to the eighth embodiment, the effect of providing stable transmittance of the light-incident-side polarizing element 80 for the blue light BL and the yellow light YL.

### Ninth embodiment

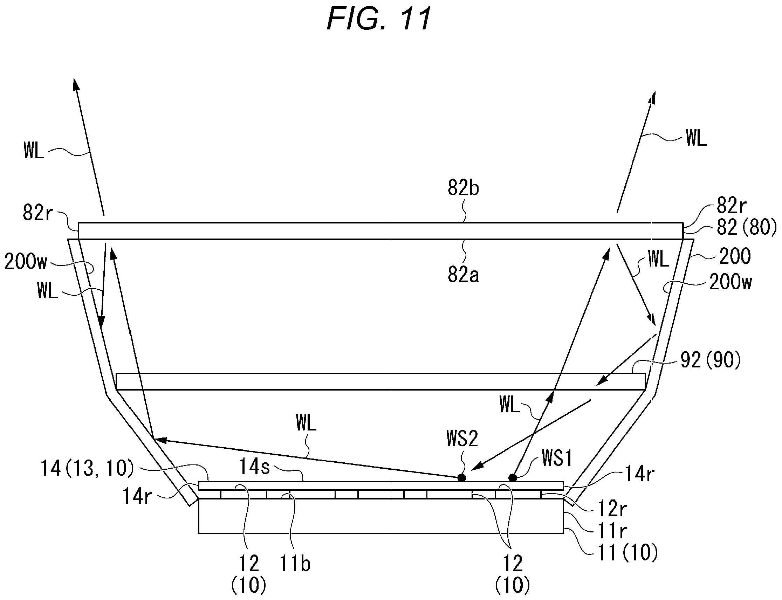

A ninth embodiment of the present disclosure will next be described with reference to FIG. 11. Although not shown, the projector according to the ninth embodiment includes the light emitter 10, the light-incident-side polarizing element 80, the pickup lens 30, the parallelizing lens 35, the light modulator 40, the light-exiting-side polarizing element 50, and the projection system 70, as the projector according to the first embodiment does, and further includes the phase retarder 90 and a rod member 200.

FIG. 11 is a schematic view illustrating the configurations of the light emitter 10, the phase retarder 90, the light-incident-side polarizing element 80, and the rod member 200 and the behavior of the light in the ninth embodiment. The phase retarder 90 is disposed on the optical path of the white light WL between the phosphor layer 14, which forms the wavelength converter 13, in the light emitter 10 and the polarizing plate 82, which forms the light-incident-side polarizing element 80, as shown in FIG. 11. The phase retarder 90 is not limited to a specific component and may be any member capable of imparting a phase retardation to the nonlinearly polarized white light WL emitted from the wavelength converter 13, and is preferably, for example, a quarter-wave plate. The phase retarder 90 is, for example, the quarter-wave plate 92 as in the projector according to the eighth embodiment.

The rod member 200 is a member that couples along the direction Z and the optical path of the white light WL at least a circumferential edge 12r of the plurality of light sources 12 as a whole in the plane XY to a circumferential edge 82r of the polarizing plate 82, which forms the light-incident-side polarizing element 80, in the plane XY, and is, for example, a tubular member. The circumferential edge 12r of the plurality of light sources 12 corresponds to the "circumferential edge of the light source" described in the claims, which will be described later. When the light emitter 10 includes one light source 12, the "circumferential edge of the light source" means the circumferential edge of the one light source 12. When the light emitter 10 includes a plurality of light sources 12, the "circumferential edge of the light source" means the circumferential edge of the region occupied by the plurality of light sources 12 at the plate surface 11b of the substrate 11.

The rod member 200 is provided to surround at least the plurality of light sources 12 and the light-incident-side polarization element 80 in the plane XY. As described in the first embodiment, in the light emitter 10, based on the fact that the blue light BL is radially emitted from each of the light sources 12, the phosphor layer 14, which forms the wavelength converter 13, is formed larger than the region occupied by the plurality of light sources 12 at the plate surface 11b of the substrate 11 in the plane XY and is, for example, as large as the substrate 11. In the ninth embodiment, the rod member 200 couples along the optical path of the white light WL a circumferential edge 11r of the substrate 11 in the plane XY to the circumferential edge 82r of the polarizing plate 82, which forms the light-incident-side polarizing element 80. When the white light WL does not leak out of the rod member 200 in the plane XY or is not, for example, diffusively reflected, an inner wall surface 200w of the rod member 200 may be disposed with a slight gap from the circumferential edge 11r of the substrate 11, a circumferential edge 14r of the phosphor layer 14, and the circumferential edge 82r of the polarizing plate 82.

Based on the fact that the blue light BL and the yellow light YL are radially emitted from the wavelength converter 13 in the light emitter 10 as described in the first embodiment, the phase retarder 90 and the light-incident-side polarizing element 80 are formed larger than the wavelength converter 13 in the plane XY, and the light-incident-side polarizing element 80 is formed larger than the phase retarder 90. The space surrounded by the inner wall surface 200w of the rod member 200 therefore expands along the direction Z from the light sources 12 toward the light-incident-side polarizing element 80. The shape and size of the rod member 200 are not limited to a specific shape and size as long as the space surrounded by the inner wall surface 200w is formed to expand as described above.

The inner wall surface 200w of the rod member 200 reflects the white light WL. To this end, the rod member 200 may be made of a material capable of reflecting the white light WL. Instead, the rod member 200 may include a base that is made of any material and couples along the optical path of the white light WL the circumferential edge 11r of the substrate 11 to the circumferential edge 82r of the polarizing plate 82 as described above, and a reflective film capable of reflecting the white light WL may be provided at the inner wall surface of the base.

The white light WL emitted from the wave source WS1 in an outer circumferential portion of the light emitting surface 14s of the phosphor layer 14, which forms the wavelength converter 13, enters the phase retarder 90. The phase retarder 90 imparts the predetermined retardation to the incident white light WL. The white light WL having exited out of the phase retarder 90 enters the light-incident-side polarizing element 80. Out of the white light WL having entered the light-incident-side polarizing element 80, the light polarized in the predetermined polarization direction passes through the light-incident-side polarizing element 80, and the light polarized in the directions other than the predetermined polarization direction is reflected off the light-incident-side polarizing element 80. The light polarized in the predetermined polarization direction and having passed through the light-incident-side polarizing element 80 enters the parallelizing lens 35, which is not shown in FIG. 11.

In particular, out of the white light WL having entered the light-incident-side polarizing element 80 along the direction in which the white light WL diverges outward in the plane XY, the light polarized in the directions other than the predetermined polarization direction is reflected off the light-incident-side polarizing element 80, and exits via the light incident surface 82a of the polarizing plate 82, which forms the light-incident-side polarizing element 80, along the direction in which the white light WL further diverges in the plane XY. The white light WL thus having exited out via the light incident surface 82a of the polarizing plate 82 along the direction of the divergence is radiated to the inner wall surface 200w of the rod member 200 and reflected off the inner wall surface 200w. The white light WL reflected off the inner wall surface 200w exits along the direction in which the white light WL converges inward in the plane XY, passes through the phase retarder 90, which imparts the predetermined phase retardation to the white light WL and converts the white light WL into polarized light. The white light WL converted by the phase retarder 90 into the polarized light exits out thereof, enters the phosphor layer 14 via the light emitting surface 14s, and is internally scattered. The white light WL is emitted from the wave source WS2, which is close to the position where the white light WL enters the phosphor layer 14 from the phase retarder 90.

Out of the white light WL emitted from the wave source WS2, part of the white light WL emitted at a wide angle with respect to the direction Z is radiated to the inner wall surface 200w of the rod member 200 before entering the phase retarder 90, and reflected off the inner wall surface 200w. The white light WL reflected off the inner wall surface 200w passes through the phase retarder 90, which imparts the predetermined phase retardation to the white light WL and converts the white light WL into polarized light. The white light WL converted by the phase retarder 90 into the polarized light exits out thereof and enters the light-incident-side polarizing element 80. Out of the white light WL having entered the light-incident-side polarizing element 80, the light polarized in the predetermined polarization direction passes through the light-incident-side polarizing element 80, and the light polarized in the directions other than the predetermined polarization direction is reflected off the light-incident-side polarizing element 80. The light polarized in the predetermined polarization direction and having passed through the light-incident-side polarizing element 80 enters the parallelizing lens 35, which is not shown in FIG. 11. The light polarized in the directions other than the predetermined polarization direction and reflected off the light-incident-side polarizing element 80 behaves in the same manner as described above. At this point, part of the white light WL having exited out via the light incident surface 82a of the polarizing plate 82 along the direction of the divergence in the plane XY is radiated to the inner wall surface 200w of the rod member 200 and reflected off the inner wall surface 200w. The white light WL reflected off the inner wall surface 200w exits along the direction in which the white light WL converges in the plane XY. As a result, the white light WL enters the phosphor layer 14 via the light emitting surface 14s.

The white light WL having exited along the direction in which the white light WL diverges in the plane XY via an outer circumferential portion of the light incident surface 82a of the polarizing plate 82, which forms the light-incident-side polarizing element 80, or the white light WL emitted from the wave sources WS1 and WS2 at a wide angle to the region outside the region in the plane XY where the light incident surface 82a of the polarizing plate 82 can be irradiated with the white light WL exits to the region outside the light emitter 10 and the light-incident-side polarizing element 80 unless the white light WL is reflected off the inner wall surface 200w of the rod member 200. Providing the rod member 200 therefore causes at least part of the white light WL having exited along the direction in which the white light WL diverges via the outer circumferential portion of the light incident surface 82a of the polarizing plate 82 and the white light WL emitted from the wave sources WS1 and WS2 at a wide angle toward the region outside the light incident surface 82a of the polarizing plate 82 to return to the wavelength converter 13. As a result, at least part of the white light WL described above exits via the light exiting surface 82b of the polarizing plate 82, which forms the light-incident-side polarizing element 80, toward the parallelizing lens 35 and is effectively used.

The projector according to the ninth embodiment described above provides the same effects as those provided by the projector according to the first embodiment. The projector according to the ninth embodiment includes the rod member 200, which couples the light sources 12 to the light-incident-side polarizing element 80. The rod member 200 is provided to surround at least the light sources 12 and the light-incident-side polarization element 80. The white light WL with which the inner wall surface 200w of the rod member 200 is irradiated is reflected off the inner wall surface 200w. The projector according to the ninth embodiment, in which the white light WL that diverges in the plane XY in the region from the light sources 12 and the wavelength converter 13 to the light-incident-side polarizing element 80 is caused to converge by using the rod member 200, can suppress loss of the white light WL.

In the projector according to the ninth embodiment, the phase retarder 90 is the quarter-wave plate 92. In the projector according to the ninth embodiment, the light-incident-side polarizing element 80 can convert the white light WL resulting from the white light WL polarized in the direction perpendicular to the predetermined polarization direction and emitted from the wavelength converter 13 into the light polarized in the predetermined polarization direction, so that the resultant polarized light can pass through the light-incident-side polarizing element 80. That is, the projector according to the ninth embodiment can preferably suppress the significant decrease in the efficiency of effective utilization of the blue light BL and the yellow light YL in the light-incident-side polarizing element 80, that is, the transmittance thereof, as the projector according to the eighth embodiment can.

Although the phase retarder 90 is preferably the quarter-wave plate 92, the phase retarder 90 may, for example, be a quartz plate having a predetermined thickness, as described in the eighth embodiment.

In the projector according to the ninth embodiment, when the wavelength converter 13 in the light emitter 10 has a high polarization conversion capability, and the white light WL resulting from the white light WL polarized in the direction perpendicular to the predetermined polarization direction and emitted from the wavelength converter 13 is converted into the light polarized in the predetermined polarization direction without the phase retarder 90 disposed, the phase retarder 90 may be omitted.

In the above description, the rod member 200, which is a hollow member formed in a tubular shape, is presented by way of example. The rod member 200 may instead be formed of a solid member that fills the space between the wavelength converter 13 and the phase retarder 90 in the direction Z, and a solid member that fills the space between the phase retarder 90 and the light-incident-side polarizing element 80 in the direction Z. Although not shown, the material of each of the rod members 200 formed of a solid member is a material that transmits the white light WL and does not affect the polarization direction of the white light WL. When the refractive index of each of the rod members 200 formed of a solid member satisfies the total reflection condition for the white light WL, the outer wall surface of the rod member 200 may not be provided with a reflective film.

Preferable embodiments of the present disclosure have been described above in detail. The present disclosure is, however, not limited to a specific embodiment, and a variety of modifications and changes can be made to the embodiments within the scope of the substance of the present disclosure described in the claims. The plurality of embodiments and variations thereof may be combined with each other as appropriate.

For example, in the projector according to the seventh embodiment, the phase retarder 90 may be disposed on the optical path of the white light WL between the biconvex lens 33B, which forms the pickup lens 30 shown in FIG. 8, and the polarizing plate 82, which forms the light-incident-side polarizing element 80. The phase retarder 90 may instead be disposed on the optical path of the white light WL between the phosphor layer 14, which forms the wavelength converter 13, and the plano-convex lens 33A, which forms the pickup lens 30.

The light-incident-side polarizing element 80 may be disposed on the optical path of the white light WL upstream from and close to the parallelizing lens 35. Furthermore, FIG. 1 shows the projector 101, in which the optical system is configured substantially linearly along the direction Z by way of example, and it is, however, noted that a reflective member or a deflection member may be disposed as appropriate on the optical paths of the white light WL and image light IM, and the optical system may be configured in a shape other than a linear shape. For example, in the projector according to each of the embodiments described above, the optical system may be configured in an L-letter shape.

### Summary of present disclosure

The present disclosure will be summarized below as additional remarks.

### Additional remark 1

A projector including a light source that emits first light, a wavelength converter that is irradiated with the first light and emits second light emitted at a wavelength different from the wavelength at which the first light is emitted, an optical system that enlarges the luminous flux of the first light passing through the wavelength converter and the luminous flux of the second light emitted from the wavelength converter, a parallelizing lens that parallelizes the light enlarged by the optical system, a light modulator on which the light parallelized by the parallelizing lens is incident and which modulates the incident light to generate image light, a light-exiting-side polarizing element on which the image light that exits out of the light modulator is incident, a projection lens that projects the image light that exits out of the light-exiting-side polarizing element, and a light-incident-side polarizing element that transmits light polarized in a predetermined polarization direction and reflects light polarized in the directions other than the predetermined polarization direction, nonlinearly polarized light entering the light-incident-side polarizing element, and the light-incident-side polarizing element disposed on the optical path of the second light between the light source and the parallelizing lens.

The configuration described in the additional remark 1, in which the nonlinearly polarized light is converted into linearly polarized light in a region closer to the light source than the parallelizing lens, allows reduction in the amount of light with which the parallelizing lens is irradiated, as compared with the projector of the related art. The thus configured projector allows reduction in degradation of the parallelizing lens due to the light incident thereon and prevention of deterioration of the parallelizing lens.

### Additional remark 2

The projector described in the additional remark 1, in which the light-incident-side polarizing element is disposed between the wavelength converter and the optical system.

The configuration described in the additional remark 2 allows reduction in size of the light-incident-side polarizing element. Furthermore, since the light-incident-side polarizing element is disposed in a region closer to the light source than the optical system including the pickup lens and other optical components, the wavelength converter can be irradiated with a large portion of the light reflected off the light-incident-side polarizing element.

### Additional remark 3

The projector described in the additional remark 2, in which the wavelength converter includes a phosphor layer, and the surface of the phosphor layer that is opposite from the surface facing the light source is parallel to the light-incident-side surface of the light-incident-side polarizing element.

The configuration described in the additional remark 3 allows the wavelength converter to be irradiated with the light reflected off the light-incident-side polarizing element, so that the light utilization efficiency can be increased.

### Additional remark 4

The projector described in the additional remark 2 or 3, in which the light-incident-side polarizing element is in contact with the wavelength converter.

The configuration described in the additional remark 4 allows the wavelength converter to be irradiated with a greater amount of the light reflected off the light-incident-side polarizing element, so that the light utilization efficiency can be further increased.

### Additional remark 5

The projector described in the additional remark 4, in which the light-incident-side polarizing element is a wire grid polarizer, and the cycle of the wire grid polarizer is shorter than half of a predetermined wavelength of the first light.

The configuration described in the additional remark 5 allows heat of the wavelength converter to be dissipated via the wire grid polarizer.

### Additional remark 6

The projector described in any one of the additional remarks 2 to 5, further including a dichroic mirror that is disposed between the light source and the wavelength converter, transmits the first light, and reflects at least part of the second light.

The configuration described in the additional remark 6 causes the light reflected off the light-incident-side polarizing element, then entering the wavelength converter, and passing through the wavelength converter to be reflected toward the light-incident-side polarizing element, so that the light utilization efficiency in the projector can be improved.

### Additional remark 7

The projector described in the additional remark 6, further including a light transmissive member disposed between the light source and the dichroic mirror.

The configuration described in the additional remark 7, which employs, for example, a manufacturing method for depositing the material of the dichroic mirror on the surface of the light transmissive member in an evaporation process, allows the dichroic mirror to be held at the surface of the light transmissive member in a stable manner. When the light transmissive member has excellent heat dissipation capability, heat of the dichroic mirror can be satisfactorily dissipated.

### Additional remark 8

The projector described in the additional remark 2, in which the light-incident-side polarizing element is provided to cover the surface of the wavelength converter that is opposite from the surface facing the light source.

The configuration described in the additional remark 8 allows the wavelength converter to be irradiated with a greater amount of the light emitted from the wavelength converter and then reflected off the light-incident-side polarizing element.

### Additional remark 9

The projector described in the additional remark 1, in which the light-incident-side polarizing element is disposed between the optical system and the parallelizing lens.

The configuration described in the additional remark 9 allows the projector to secure a large space where the light-incident-side polarizing element is disposed to increase the degree of freedom in the position where the light-incident-side polarizing element is disposed.

### Additional remark 10

The projector described in the additional remark 9, further including a dichroic mirror that is disposed between the light source and the wavelength converter, transmits the first light, and reflects at least part of the second light.

The configuration described in the additional remark 10 allows the projector to secure a large space where the light-incident-side polarizing element is disposed, so that the light-incident-side polarizing element can be readily disposed. Furthermore, the light reflected off the light-incident-side polarizing element, then entering the wavelength converter 13, and passing through the wavelength converter 13 is reflected off the dichroic mirror, so that the light utilization efficiency in the projector can be improved.

### Additional remark 11

The projector described in any one of the additional remarks 1 to 10, further including a phase retarder disposed between the wavelength converter and the light-incident-side polarizing element.

The configuration described in the additional remark 11 can modulate the phase of the light reflected off the light-incident-side polarizing element and then emitted from the wavelength converter to suppress a decrease in the transmittance of the light-incident-side polarizing element for the first light and the second light.

### Additional remark 12

The projector described in the additional remark 11, in which the phase retarder is in contact with the light-incident-side polarizing element.

The configuration described in the additional remark 12 allows stable transmittance of the light-incident-side polarizing element for the first light and the second light.

### Additional remark 13

The projector described in the additional remark 11 or 12, in which the phase retarder is a quarter-wave plate.

The configuration described in the additional remark 13 can increase the transmittance of the light-incident-side polarizing element for the light polarized in the direction perpendicular to the predetermined polarization direction out of the light reflected off the light-incident-side polarizing element. As a result, a significant decrease in the transmittance of the light incident-side polarizing element for the first light and the second light can be efficiently suppressed.

### Additional remark 14

The projector described in the additional remark 11, further including a rod member that couples along the optical path the circumferential edge of the light source to the circumferential edge of the light-incident-side polarizing element, is provided to surround at least the light source and the light-incident-side polarizing element, and reflects the light with which the inner wall surface of the rod member is irradiated.

The configuration described in the additional remark 14, in which the rod member reflects the divergent light between the wavelength converter and the light-incident-side polarizing element and causes the divergent light to converge, can suppress loss of the light in the region between the wavelength converter and the light-incident-side polarizing element.

## Claims

1. A projector comprising:
a light source that emits first light;
a wavelength converter that is irradiated with the first light and emits second light emitted at a wavelength different from a wavelength at which the first light is emitted;
an optical system that enlarges a luminous flux of the first light passing through the wavelength converter and a luminous flux of the second light emitted from the wavelength converter;
a parallelizing lens that parallelizes the light enlarged by the optical system;
a light modulator on which the light parallelized by the parallelizing lens is incident and which modulates the incident light to generate image light;
a light-exiting-side polarizing element on which the image light that exits out of the light modulator is incident;
a projection lens that projects the image light that exits out of the light-exiting-side polarizing element; and
a light-incident-side polarizing element that transmits light polarized in a predetermined polarization direction and reflects light polarized in a direction other than the predetermined polarization direction,
wherein nonlinearly polarized light enters the light-incident-side polarizing element, and
the light-incident-side polarizing element is disposed on an optical path of the second light between the light source and the parallelizing lens.

2. The projector according to claim 1,
wherein the light-incident-side polarizing element is disposed between the wavelength converter and the optical system.

3. The projector according to claim 2,
wherein the wavelength converter includes a phosphor layer, and
a surface of the phosphor layer that is opposite from a surface facing the light source is parallel to a light-incident-side surface of the light-incident-side polarizing element.

4. The projector according to 2,
wherein the light-incident-side polarizing element is in contact with the wavelength converter.

5. The projector according to claim 4,
wherein the light-incident-side polarizing element is a wire grid polarizer, and
a cycle of the wire grid polarizer is shorter than half of a predetermined wavelength of the first light.

6. The projector according to claim 2,
further comprising a dichroic mirror that is disposed between the light source and the wavelength converter, transmits the first light, and reflects at least part of the second light.

7. The projector according to claim 6,
further comprising a light transmissive member disposed between the light source and the dichroic mirror.

8. The projector according to claim 2,
wherein the light-incident-side polarizing element is provided so as to cover a surface of the wavelength converter that is opposite from a surface facing the light source.

9. The projector according to claim 1,
wherein the light-incident-side polarizing element is disposed between the optical system and the parallelizing lens.

10. The projector according to claim 9,
further comprising a dichroic mirror that is disposed between the light source and the wavelength converter, transmits the first light, and reflects at least part of the second light.

11. The projector according to claim 1,
further comprising a phase retarder disposed between the wavelength converter and the light-incident-side polarizing element.

12. The projector according to claim 11,
wherein the phase retarder is a quarter-wave plate.

13. The projector according to claim 11,
wherein the phase retarder is in contact with the light-incident-side polarizing element.

14. The projector according to claim 13,
wherein the phase retarder is a quarter-wave plate.

15. The projector according to claim 1,
further comprising a rod member that couples along the optical path of the second light a circumferential edge of the light source to a circumferential edge of the light-incident-side polarizing element, is provided to surround at least the light source and the light-incident-side polarizing element, and reflect light with which an inner wall surface of the rod member is irradiated.
